(19) Europäisches Patentamt
European Patent Office
Office européen des brevets

(11) **EP 1 725 839 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(21) Anmeldenummer: **05717065.6**

(22) Anmeldetag: **16.03.2005**

(51) Int Cl.:
*G01F 1/84* (2006.01)   *G01N 9/00* (2006.01)
*G01N 11/16* (2006.01)   *G01F 15/02* (2006.01)

(86) Internationale Anmeldenummer:
**PCT/EP2005/051198**

(87) Internationale Veröffentlichungsnummer:
**WO 2005/095901 (13.10.2005 Gazette 2005/41)**

(54) **CORIOLIS-MASSEDURCHFLUSS-MESSGERÄT**

CORIOLIS MASS FLOWMETER

DEBITMETRE MASSIQUE DE TYPE CORIOLIS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.03.2004 DE 102004014029**
**30.04.2004 DE 102004021690**

(43) Veröffentlichungstag der Anmeldung:
**29.11.2006 Patentblatt 2006/48**

(73) Patentinhaber: **Endress+Hauser Flowtec AG**
**4153 Reinach (CH)**

(72) Erfinder:
• **DRAHM, Wolfgang**
  **85435 Erding (DE)**
• **FUCHS, Michael**
  **79427 Eschbach (DE)**
• **RIEDER, Alfred**
  **84032 Landshut (DE)**
• **SPRICH, Hans-Jörg**
  **79650 Schopfheim (DE)**
• **ITIN, Ibho**
  **CH-4410 Liestal (CH)**
• **WYSS, Samuel**
  **CH-4123 Allschwil (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**US-A1- 2001 039 829    US-A1- 2002 184 940**

## Beschreibung

Die Erfindung betrifft einen Coriolis-Massedurchfluß-/ Dichtemesser für ein in einer Rohrleitung strömendes, insb. zwei- oder mehrphasiges, Medium sowie ein Verfahren zum Erzeugen eines einen Massedurchfluß repräsentierenden Meßwerts.

In der Prozeß-Meß- und Automatisierungstechnik werden für die Messung physikalischer Parameter eines in einer Rohrleitung strömenden Mediums, wie z.B. dem Massedurchfluß, der Dichte und/oder der Viskosität, oftmals solche In-Line-Meßgeräte, insb. Coriolis-Massendurchfluß-Meßgeräte, verwendet, die mittels eines in den Verlauf der mediumsführenden Rohrleitung eingesetzten, im Betrieb vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte korrespondierende Trägheitskräfte oder mit der Viskosität korrespondierende Reibungskräfte etc., bewirken und von diesen abgeleitet ein den jeweiligen Massedurchfluß, ein die jeweilige Viskosität und/oder ein die jeweilige Dichte des Mediums repräsentierendes Meßsignal erzeugen. Derartige In-Line-Meßgeräte mit einem Meßaufnehmer vom Vibrationstyp sowie deren Wirkungsweise sind dem Fachmann an und für sich bekannt und z.B. in der WO-A 03/095950, WO-A 03/095949, WO-A 03/076880, der WO-A 02/37063, der WO-A 01/33174, der WO-A 00/57141, der WO-A 99/39164, der WO-A 98/07009, der WO-A 95/16897, der WO-A 88/03261, der US 2003/0208325, der US-B 66 91 583, der US-B 66 51 51 13, der US-B 65 13 393, der US-B 65 05 519, der US-A 60 06 609, der US-A 58 69 770, der US-A 57 96 011, der US-A 56 02 346, der US-A 56 02 345, der US-A 55 31 126, der US-A 53 01 557, der US-A 52 53 533, der US-A 52 18 873, der US-A 50 69 074, der US-A 48 76 898, der US-A 47 33 569, der US-A 46 60 421, der US-A 45 24 610, der US-A 44 91 025, der US-A 41 87 721, der EP-A 1 281 938, der EP-A 1 001 254 oder der EP-A 553 939 ausführlich und detailliert beschrieben.

Zum Führen des Mediums umfassen die Meßaufnehmer jeweils mindestens ein in einem, beispielsweise rohr- oder kastenförmigen, Tragrahmen gehaltenes Meßrohr mit einem gebogenen oder geraden Rohrsegment, das zum Erzeugen oben genannter Reaktionskräfte im Betrieb - angetrieben von einer elektro-mechanischen Erregeranordnung - vibrieren gelassen wird. Zum Erfassen, insb. einlassseitiger und auslaßseitiger, Vibrationen des Rohrsegments weisen die Meßaufnehmer ferner jeweils eine auf Bewegungen des Rohrsegments reagierende physikalisch-elektrische Sensoranordnung auf. Bei Coriolis-Massedurchflußmeßgerätn für ein in einer Rohrleitung strömendes Medium beruht die Messung des Massedurchflusses beispielsweise darauf, daß das Medium durch das in Rohrleitung eingefügte und im Betrieb schwingende Meßrohr strömen gelassen wird, wodurch das Medium Corioliskräfte erfährt. Diese wiederum bewirken, daß einlaßseitige und auslaßseitige Bereiche des Meßrohrs zueinander phasenverschoben schwingen. Die Größe dieser Phasenverschiebungen dient als ein Maß für den Massedurchfluß. Die Schwingungen des Meßrohrs werden daher mittels zweier entlang des Meßrohres voneinander beabstandeter Schwingungssensoren der vorgenannten Sensoranordnung erfaßt und in Schwingungsmeßsignale gewandelt, aus deren gegenseitiger Phasenverschiebung der Massedurchfluß abgleitet wird.

Bereits die eingangs referierte US-A 41 87 721 erwähnt, daß mit Coriolis-Massedurchfluß-Messgeräten üblicherweise auch die momentane Dichte des strömenden Mediums meßbar ist, und zwar anhand einer Frequenz wenigstens eines der von der Sensoranordnung gelieferten Schwingungsmeßsignale. Überdies wird zumeist auch eine Temperatur des Mediums in geeigneter Weise direkt gemessen, beispielsweise mittels eines am Meßrohr angeordneten Temperatursensors. Neben dem Massendurchfluß und/oder der Dichte des Mediums kann mittels Coriolis-Massedurchfluß-Messgeräten oder anderen In-Line-Messgeräten mit einem Messaufnehmer vom Vibrationstyp ferner auch eine Viskosität und/oder ein Viskositäts-Dichte-Produkt des im Messrohr strömenden Mediums gemessen werden, vgl. hierzu insb. die US-B 66 51 513, die US-A 55 31 126, die US-A 52 53 533, die US-A 45 24 610 oder die WO-A 95/16897. Es kann daher ohne weiteres vorausgesetzt werden, daß - selbst wenn nicht ausdrücklich beschrieben - mittels moderner In-Line-Meßgeräten mit einem Messaufnehmer vom Vibationstyp, insb. mittels Coriolis-Massendurchfluß-Meßgeräten, jedenfalls auch Dichte, Viskosität und/oder Temperatur des Mediums gemessen werden können, zumal diese bei der Massendurchflußmessung ohnehin zur Kompensation von Meßfehlern infolge schwankender Mediumsdichte und/oder Mediumsviskosität stets heran zu ziehen sind, vgl. hierzu insb. die bereits erwähnten

US-B 65 13 393, US-A 60 06 609, US-A 56 02 346, WO-A 02/37063, WO-A 99/39164 oder auch die WO-A 00/36379.

Bei der Verwendung von Meßaufnehmern vom Vibrationstyp hat es sich jedoch, wie beispielsweise auch in der JP-A 10-281846, der WO-A 03/076880 oder der US-B 65 05 519 diskutiert, gezeigt, daß bei inhomogenen Medien, insb. zwei- oder mehrphasigen Medien, die von den Schwingungen des Meßrohrs abgeleiteten Schwingungsmeßsignale, insb. auch die erwähnte Phasenverschiebung, trotz dem Viskosität und Dichte in den einzelnen Mediumsphasen sowie auch der Massendurchfluß praktisch konstantgehalten und/oder entsprechend mitberücksichtigt werden, in erheblichem Maße Schwankungen unterliegen und so ggf. für die Messung des jeweiligen physikalischen Parameters ohne abhelfende Maßnahmen völlig unbrauchbar werden können. Solche inhomogenen Medien können beispielsweise Flüssigkeiten sein, in die, wie z.B. bei Dosier- oder Abfüllprozessen praktisch unvermeidbar, ein in der Rohrleitung vorhandenes Gas, insb. Luft, eingetragen ist oder aus denen ein gelöstes Medium, z.B. Kohlendioxid, ausgast und zur Schaumbildung führt. Als ein weitere Beispiele für solche inhomogenen Medien seien ferner auch Emulsionen sowie Naß- oder Sattdampf genannt. Als Ursachen für die mit der Messung von inhomogenen Medien mittels Messaufnehmern vom Vibrationstyp seien exemplarisch das einseitige Anlagern oder Absetzen von in Flüssigkeiten mitgeführten Gasblasen oder Feststoffpartikeln innen an der Messrohrwand und der sogenannte "Bubble-Effekt" erwähnt, bei dem in der Flüssigkeit mitgeführte Gasblasen als Strömungskörper für quer zur Messrohrlängsachse beschleunigte Flüssigkeitsteilvolumina wirkt. Während zur Verringerung der mit zwei- oder mehrphasigen Medien einhergehenden Meßfehler in der WO-A 03/076880 eine der eigentlichen Durchflußmessung vorausgehende Strömungs- bzw. Mediumskonditionierung vorgeschlagen ist, wird beispielsweise sowohl in der JP-A 10-281846 als auch in der US-B 65 05 519 jeweils eine, insb. auf der Auswertung von Defiziten zwischen einer hochgenau gemessenen, tatsächlichen Mediumsdichte und einer mittels Coriolis-Massedurchflußmessgeräten im Betrieb ermittelten, scheinbaren Mediumsdichte beruhende, Korrektur der auf den Schwingungsmeßsignalen beruhenden Durchflußmessung, insb. der Massendurchflußmessung, beschrieben.

Im besonderen werden dafür vorab trainierter, ggf. auch adaptiver Klassifikatoren für die Schwingungsmesssignale vorgeschlagen. Die Klassifikatoren können beispielsweise als Kohonen-Karte oder Neuronales Netzwerk ausgelegt sein und die Korrektur entweder anhand einiger weniger im Betrieb gemessener Parametern, insb. dem Massedurchfluß und der Dichte, sowie weiterer davon abgeleiteter Merkmalen oder auch unter Verwendung eines eine oder mehrere Schwingungsperioden einschließenden Intervalls der Schwingungsmeßsignale vornehmen. Die Verwendung eines solchen Klassifikators birgt beispielsweise den Vorteil, daß im Vergleich zu herkömmlichen Coriolis-Massedurchfluß-/ Dichtemessern am Meßaufnehmer keine oder nur sehr geringfügige Änderungen vorgenommen werden müssen, sei es am mechanischen Aufbau, an der Erregeranordnung oder der diese steuernden Betriebsschaltung, die der speziellen Anwendung besonders angepaßt sind. Allerdings besteht ein erheblicher Nachteil solcher Klassifikatoren u.a. darin, daß im Vergleich zu herkömmlichen Coriolis-Massedurchflußmeßgerätn erhebliche Änderungen im Bereich der Meßwerterzeugung vor allem hinsichtlich der verwendeten Analog-zu-Digital-Wandler und der Mikroprozessoren erforderlich sind. Wie nämlich auch in der US-B 65 05 519 beschrieben, ist für eine derartige Signalauswertung beispielsweise bei der Digitalisierung der Schwingungsmeßsignale, die eine Schwingungsfrequenz von etwa 80 Hz aufweisen können, eine Abtastrate von etwa 55 kHz oder mehr für eine ausreichende Genauigkeit erforderlich. Anders gesagt, die Schwingungsmeßsignale sind mit einem Abtastverhältnis von weit über 600:1 abzutasten. Überdies fällt auch die in der digitalen Meßschaltung gespeicherte und ausgeführte Firmware entsprechend komplex aus. Ein weiterer Nachteil solcher Klassifikatoren ist auch darin zu sehen, daß sie auf die im Betrieb des Meßaufnehmers tatsächlich vorherrschenden Meßbedingungen, sei es die Einbausituation, das zu messende Medium und dessen zumeist veränderlichen Eigenschaften oder andere die Meßgenauigkeit beeinflussende Faktoren, trainiert und entsprechend validiert werden müssen. Aufgrund der hohen Komplexität des Zusammenspiels aller dieser Faktoren kann das Training und dessen Validierung abschließend zumeist nur vor Ort und für jeden Meßaufnehmer indivduell erfolgen, was wiederum einen erheblichen Aufwand bei der Inbetriebnahme des Meßaufnehmers zur Folge hat. Im übrigen hat es sich auch gezeigt, daß derartige Klassifikations-Algorithmen, einerseits aufgrund der hohen Komplexität, andererseits infolgedessen, daß zumeist ein entsprechendes physikalisch-mathematisches Modells mit technisch relevanten oder nachvollziehbaren Parameter nicht explizit vorhanden ist, Klassifikatoren eine sehr geringe Transparenz aufweisen und somit oftmals schwer vermittelbar sind. Damit einhergehend können ohne weiteres erhebliche Vorbehalte beim Kunden auftreten, wobei solche Akzeptanzprobleme beim Kunden insb. dann auftreten können, wenn es sich beim verwendeten Klassifikator zu dem um einen selbst adaptierenden, beispielsweise ein Neuronales Netzwerk, handelt.

Als eine weitere Möglichkeit zur Umgehung des Problems mit inhomogenen Medien wird beispielsweise bereits in der US-A 45 24 610 vorgeschlagen, den Meßaufnehmer so einzubauen, daß das gerade Meßrohr im wesentlichen senkrecht verläuft und somit ein Anlagern solcher störender, insb. gasförmiger, Inhomogenitäten weitestgehend verhindert wird. Hierbei handelt es sich jedoch um eine sehr spezielle, in der industriellen Prozeßmeßtechnik nicht immer ohne weiters realisierbare Lösung. Zum einen müßte nämlich für diesen Fall die Rohrleitung, in die der Meßaufnehmer eingefügt werden soll, ggf. an diesen angepaßt werden und nicht umgekehrt, was für den Anwender einen erhöhten Mehraufwand bei der Realisierung der Messstelle bedeuten kann. Zum anderen kann es sich bei den Meßrohren, wie bereits erwähnt, auch um solche mit einer gekrümmten Rohrform handeln, so daß das Problem auch durch eine Anpassung der Einbaulage nicht immer befriedigend gelöst werden kann. Es hat sich hierbei außerdem gezeigt, daß die vorgenannten Verfälschungen des Meßsignals auch bei Verwendung eines senkrecht eingebauten, geraden Meßrohrs nicht unbedingt sicher vermieden werden können.

Eine Aufgabe der Erfindung besteht daher darin, ein entsprechendes Coriolis-Massendurchflußmessgerät anzugeben, das geeignet ist, den Massendurchfluß auch bei inhomogenen, insb. zwei- oder mehrphasigen, Medien sehr genau zu messen, und zwar möglichst mit einem Messfehlerbetrag von kleiner 10% bezogen auf den tatsächlichen Massendurchfluß. Eine weitere Aufgabe besteht darin, ein entsprechendes Verfahren für die Erzeugung eines entsprechenden Massendurchfluß-Meßwerts anzugeben.

Zur Lösung dieser Aufgabe besteht die Erfindung in einem Coriolis-Massendurchflußmeßgerät, insb. Coriolis- Massedurchfluß-/ Dichtemessgerät oder Coriolis-Massedurchfluß-/ Viskositätsmeßgerät, zum Messen eines Massedurchflusses eines in einer Rohrleitung strömenden, insb. zwei- oder mehrphasigen, Mediums, welches Coriolis-Massendurchflußmeßgerät einen Meßaufnehmer vom Vibrationstyp und einer mit dem Meßaufnehmer elektrisch gekoppelte Meßgerät-Elektronik umfaßt,

- wobei der Meßaufnehmer aufweist:

  -- mindestens ein in den Verlauf der Rohrleitung eingesetztes, insb. im wesentlichen gerades, und dem Führen des zu messenden Mediums dienendes Meßrohr, das mit der angeschlossenen Rohrleitung kommuniziert,
  -- eine auf das Meßrohr einwirkende Erregeranordnung zum Vibrierenlassen des wenigstens einen Meßrohrs, die das Meßrohr im Betrieb zumindest zeitweise und/oder zumindest anteilig in Biegeschwingungen versetzt, sowie
  -- eine Sensoranordnung zum Erfassen von Vibrationen des wenigstens einen Meßrohrs, die wenigstens ein einlaßseitige Schwingungen des Meßrohrs repräsentierenden ersten Schwingungsmeßsignals und wenigstens eines auslaßseitige Schwingungen des Meßrohrs repräsentierenden zweiten Schwingungsmeßsignals liefert, und

- wobei die Meßgerät-Elektronik

  -- zumindest zeitweise einen die Erregeranordnung treibenden Erregerstrom und zumindest zeitweise einen Massedurchfluß-Meßwert liefert, der einen zu messenden Massedurchfluß repräsentiert,
  -- einen von den Schwingungsmeßsignalen abgeleiteten ersten Zwischenwert, der mit dem zu messenden Massedurchfluß und/oder mit einer Phasendifferenz zwischen den beiden Schwingungsmeßsignalen korrespondiert, sowie einen vom Erregerstrom und/oder von einem Anteil des Erregerstroms abgeleiteten zweiten Zwischenwert erzeugt, der mit einer, insb. von einer scheinbaren Viskosität und/oder einem Viskositäts-Dichte-Produkt des im Messrohr geführten Mediums abhängigen, Dämpfung der Schwingungen des Messrohrs korrespondiert, sowie
  -- unter Verwendung des zweiten Zwischenwerts und eines vorab oder im Betrieb, insb. auch unter Verwendung des Meßaufnehmers und/oder der Meßgerät-Elektronik, ermittelten Viskositäts-Meßwerts, der mit einer Viskosität des im Messrohr geführten Mediums und/oder mit einer vorgegebenen Referenz-Viskosität korrespondiert, einen Korrekturwert für den ersten Zwischenwert und anhand des ersten Zwischenwerts und des Korrekturwerts den Massedurchfluß-Meßwert erzeugt.

Ferner besteht die Erfindung in einem Verfahren zum Messen eines Massedurchflusses eines in einer Rohrleitung strömenden, insb. zwei- oder mehrphasigen, Mediums, mittels eines Coriolis-Massendurchflußmeßgeräts mit einem Meßaufnehmer vom Vibrationstyp und einer mit dem Meßaufnehmer elektrisch gekoppelten Meßgerät-Elektronik, welches Verfahren folgende Schritte umfasst:

- Strömenlassen des zu messenden Mediums durch wenigstens ein mit der Rohrleitung kommunizierendes Messrohr des Meßaufnehmers und Einspeisen eines Erregerstroms in eine mit dem das Medium führenden Meßrohr mechanisch gekoppelten Erregeranordnung zum Bewirken von mechanischen Schwingungen, insb. Biegeschwingungen, des Meßrohrs,
- Vibrierenlassen des Meßrohrs in einem zum Erzeugen von Corioliskräften im hindurchströmenden Medium geeigneten Schwingungsmode,
- Erfassen von Vibrationen des Meßrohrs und Erzeugen eines einlaßseitige Schwingungen repräsentierenden ersten Schwingungsmeßsignals und eines auslaßseitige Schwingungen repräsentierenden zweiten Schwingungsmeßsignals,
- Entwickeln eines mit dem zu messenden Massedurchfluß und/oder mit einer Phasendifferenz zwischen den beiden Schwingungsmeßsignalen korrespondierenden ersten Zwischenwertes unter Verwendung der beiden Schwingungsmeßsignale,
- Ermitteln eines der vom Erregerstrom abgeleiteten zweiten Zwischenwerts, der mit einer, insb. von einer scheinbaren Viskosität und/oder einem Viskositäts-Dichte-Produkt des im Messrohr geführten Mediums abhängigen, Dämpfung der Schwingungen des Messrohrs korrespondiert,
- Erzeugen eines Korrekturwertes für den Zwischenwert mittels des zweiten Zwischenwerts und mittels eines vorab, insb. auch unter Verwendung des Messaufnehmers und/oder der Meßgerät-Elektronik, ermittelten, mit einer Viskosität des im Messrohr geführten Mediums korrespondierenden Viskositäts-Meßwerts sowie
  Korrigieren des Zwischenwertes mittels des Korrekturwertes und Erzeugen eines den zu messenden Massendurchfluß repräsentierenden Massedurchfluß-Meßwerts.

Nach einer ersten Ausgestaltung des Coriolis-Massedurchflußmeßgeräts der Erfindung repräsentiert der Korrekturwert eine Abweichung der Viskosität des Mediums von einer im Betrieb anhand des Erregerstroms und/oder eines Anteils des Erregerstroms ermittelten scheinbaren Viskosität des im Messrohr geführten Mediums und/oder von einem im Betrieb anhand des Erregerstroms ermittelten Viskositäts-Dichte-Produkt des im Messrohr geführten Mediums.

Nach einer zweiten Ausgestaltung des Coriolis-Massedurchflußmeßgeräts der Erfindung ermittelt die Meßgerät-Elektronik den Korrekturwert anhand eines Vergleichs des zweiten Zwischenwerts mit dem Viskositäts-Meßwert und/oder anhand einer zwischen dem zweiten Zwischenwert und dem Viskositäts-Meßwert bestehenden Differenz.

Nach einer dritten Ausgestaltung des Coriolis-Massedurchflußmeßgeräts der Erfindung erzeugt die Meßgerät-Elektronik den zweiten Zwischenwert auch unter Verwendung wenigstens eines der Schwingungsmeßsignale. Nach einer vierten Ausgestaltung des Coriolis-Massedurchflußmeßgeräts der Erfindung versetzt die Erregeranordnung das Messrohr im Betrieb zumindest zeitweise und/oder zumindest anteilig in, insb. mit den Biegeschwingungen alternierende oder diesen zeitweise überlagerte, Torsionsschwingungen um eine gedachte, mit dem Meßrohr im wesentlichen fluchtende Messrohrlängsachse, insb. eine Trägheitshauptachse des Messrohrs, und ermittelt die Meßgerät-Elektronik auch den Viskositäts-Meßwert anhand des die Erregeranordnung treibenden Erregerstroms und/oder eines Anteils des Erregerstroms ermittelt.

Nach einer fünften Ausgestaltung des Coriolis-Massedurchflußmeßgeräts der Erfindung führt das Meßrohr, angetrieben von der Erregeranordnung, Torsionsschwingungen mit einer Meßrohr-Torsisonsschwingfrequenz aus, die verschieden eingestellt ist von einer Meßrohr-Lateralschwingfrequenz mit der das Messrohr, angetrieben von der Erregeranordnung, Lateral-Schwingungen, insb. Biegeschwingungen, ausführt.

Nach einer sechsten Ausgestaltung des Coriolis-Massedurchflußmeßgeräts der Erfindung erzeugt die Meßgerät-Elektronik auch den Viskositäts-Meßwert.

Nach einer siebenten Ausgestaltung des Coriolis-Massedurchflußmeßgeräts der Erfindung

- liefert die Meßgerät-Elektronik einen vom ersten und/oder vom zweiten Schwingungsmeßsignal abgeleiteten, eine Dichte des Mediums repräsentierenden Dichte-Meßwert und
- ermittelt die Meßgerät-Elektronik den Korrekturwert, insb. den Viskositäts-Meßwert, auch anhand des Dichte-Meßwerts.

Nach einer achten Ausgestaltung des Coriolis-Massedurchflußmeßgeräts der Erfindung ist die Meßgerät-Elektronik mit einem externen, insb. vom Coriolis-Massendurchflußmeßgerät entfernt angeordneten, Viskositäts-Meßgerät gekoppelt, das zumindest zeitweise den Viskositäts-Meßwert liefert.

Nach einer neunten Ausgestaltung des Coriolis-Massedurchflußmeßgeräts der Erfindung ist die Meßgerät-Elektronik zumindest zeitweise mit einem Diffrenz-Drucksensor gekoppelt ist, der zumindest zeitweise einen eine entlang der Rohrleitung gemessene Druckdifferenz repräsentierenden Druckdifferenz-Meßwert liefert.

Nach einer zehnten Ausgestaltung des Coriolis-Massedurchflußmeßgeräts der Erfindung ermittelt die Meßgerät-Elektronik anhand des Erregerstroms und/oder anhand eines Anteils des Erregerstroms sowie unter Verwendung des Viskositäts-Meßwerts zumindest zeitweise einen Konzentrations-Meßwert, der bei einem zwei- oder mehrphasigen Medium im Messrohr einen, insb. relative, Volumen- und/oder Massenanteil einer Mediumsphase repräsentiert.

Nach einer elften Ausgestaltung des Coriolis-Massedurchflußmeßgeräts der Erfindung kommuniziert das Messrohr mit der angeschlossenen Rohrleitung über ein in ein Einlaßende mündendes Einlaßrohrstück und über ein in ein Auslaßende (12#) mündendes Auslaßrohrstück, und umfasst der Meßaufnehmer einen am Einlaßende und am Auslaßende des Messrohrs fixierten, insb. auch mit der Erregeranordnung mechanischen gekoppelten, Gegenschwinger, der im Betrieb zumindest zeitweise, insb. gegenphasig zum Messrohr, vibriert.

Nach einer zwölften Ausgestaltung des Coriolis-Massedurchflußmeßgeräts der Erfindung wird das Coriolis-Massendurchflußmeßgerät zum Messen eines Massedurchflusses eines in einer Rohrleitung strömenden zwei- oder mehrphasigen Mediums, insb. eines Flüssigkeits-Gas-Gemisches, verwendet.

Nach einer ersten Ausgestaltung des Verfahrens der Erfindung umfasst dieses weiters den Schritt Bewirken von Biegeschwingungen des Meßrohrs zum Erzeugen von Corioliskräften im hindurchströmenden Medium.

Nach einer zweiten Ausgestaltung des Verfahrens der Erfindung umfasst dieses weiters den Schritt Bewirken von, insb. den Biegeschwingungen überlagerten, Torsionsschwingungen des Meßrohrs, sowie den Schritt Ermitteln eines zweiten Zwischenwerts unter Berücksichtigung des Erregerstroms und/oder zumindest eines die Torsionsschwirigungen des Messrohrs bewirkenden Anteils vom Erregerstrom.

Nach einer dritten Ausgestaltung des Verfahrens der Erfindung umfasst der Schritt des Erzeugens des Korrekturwertes für den Zwischenwert weiters den Schritt Vergleichen des zweiten Zwischenwerts mit dem Viskositäts-Meßwert und/oder Ermitteln einer zwischen dem zweiten Zwischenwert und dem Viskositäts-Meßwert bestehenden Differenz sowie den Schritt Ermitteln einer Abweichung der Viskosität des Mediums von einer im Betrieb anhand des Erregerstroms ermittelten scheinbaren Viskosität des im Messrohr geführten Mediums und/oder von einem im Betrieb anhand des Erregerstroms ermittelten Viskositäts-Dichte-Produkts des im Messrohr geführten Mediums.

Nach einer vierten Ausgestaltung des Verfahrens der Erfindung umfasst dieses weiters den Schritt Entwickeln eines eine Dichte des Mediums repräsentierenden zweiten Meßwerts anhand der Schwingungsmeßsignale sowie den Schritt Entwickeln eines Korrekturwertes unter Verwendung des zweiten Meßwerts.

Nach einer fünften Ausgestaltung des Verfahrens der Erfindung wird dieses zum Kalibrieren eines Coriolis-Massendurchflußmeßgerät und/oder eines Meßaufnehmers vom Vibrationstyp mit wenigstens einem Messrohr angewendet.

Die Erfindung beruht im besonderen auf der Erkenntnis, daß die in den Meßaufnehmer zur Aufrechterhaltung der Lateralschwingungen des Meßrohrs eingespeiste Erregerleistung in einem hohen Maße von Inhomogenitäten im zu messenden Medium, wie z.B. eingeperlten Gasblasen oder mitgeführten Feststoffpartikeln etc., beeinflußt werden kann. Wird diese, von einer scheinbaren Viskosität und/oder einem Viskositäts-Dichte-Produkt des im Messrohr geführten Mediums abhängige, Erregerleistung mit einer tatsächlichen oder zumindest erheblich genauer gemessen Viskosität des Mediums, beipsielweise durch eine entsprechende externe und/oder interne Referenz-Messung, verglichen, so kann daraus abgeleitet der für die Massendurchflußmessung momentan relevante Anteil an Inhomogenitäten im Medium ausreichend genau abgeschätzt werden. Ein besonderer Vorteil der Erfindung ist u.a. darin zu sehen, dass sogar auch Referenz-Messung für die Viskosität mittels desselben Coriolis-Masseridurchflußmeßgeräts durchgeführt und somit unabhängig von allfälligen externen Meßstellen vorgenommen werden kann.

Ein weitere Vorteil der Erfindung besteht ferner auch darin, daß beim erfindungsgemäßen Coriolis-Massendurchflußmeßgerät im Vergleich zu einem herkömmlichen lediglich bei der üblicherweise digitalen Messwerterzeugung geringfügige, im wesentlichen auf die Firmware beschränkte Änderungen vorgenommen werden müssen, während sowohl beim Meßaufnehmer wie auch bei der Erzeugung und Vorverarbeitung der Schwingungsmeßsignale keine oder nur eher geringfügige Änderungen erforderlich sind. So können beispielsweise auch die Schwingungsmeßsignale nach wie vor mit einem üblichen Abtastverhältnis von weit unter 100:1, insb. von etwa 10:1, abgetastet werden.

Die Erfindung und weitere vorteilhafte Ausgestaltungen werden nun anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert, wird auf bereits erwähnte Bezugszeichen in nachfolgenden Figuren verzichtet.

Fig. 1 zeigt ein in eine Rohrleitung einfügbares Coriolis-Massedurchfluß-Meßgerät zum Messen eines Massendurchflusses eines in der Rohrleitung geführten Fluids,

Fig. 2 zeigt ein Ausführungsbeispiel für einen für das Meßgerät von Fig. 1 geeigneten Meßaufnehmer vom Vibrations-Typ in einer perspektivischen Seitenansicht,

Fig. 3 zeigt den Meßaufnehmer von Fig. 2 geschnitten in einer Seitenansicht,

Fig. 4 zeigt den Meßaufnehmer von Fig. 2 in einem ersten Querschnitt,

Fig. 5 zeigt den Meßaufnehmer von Fig. 2 in einem zweiten Querschnitt,

Fig. 6 zeigt ein weiteres Ausführungsbeispiele für einen für das Coriolis-Massedurchfluß-Meßgerät von Fig. 1 geeigneten Meßaufnehmer vom Vibrations-Typ geschnitten in einer Seitenansicht,

Fig. 7 zeigt schematisch nach der Art eines Blockschaltbildes eine bevorzugte Ausgestaltung einer für das Coriolis-Massedurchfluß-Meßgerät von Fig. 1 geeigneten Meßgerät-Elektronik, und

Fig. 8, 9 zeigen graphisch mit einem

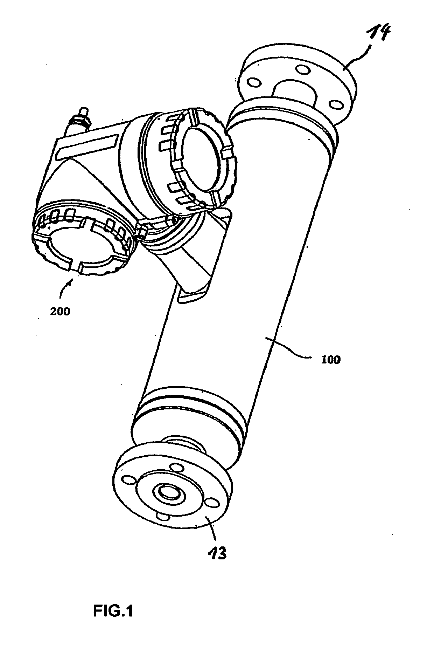

Coriolis-Massedurchfluß-Meßgerät gemäß den Fig. 1 bis 7 experimentell ermittelte Messdaten.

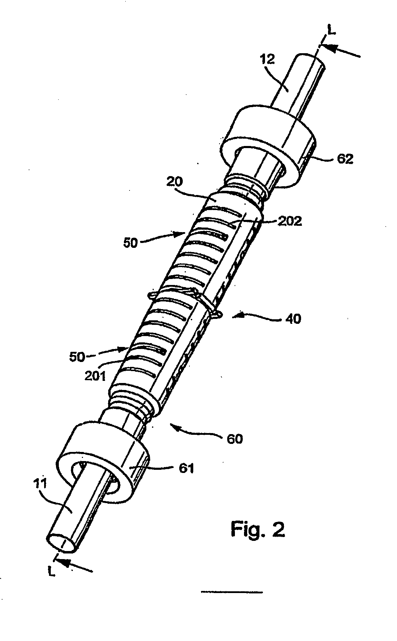

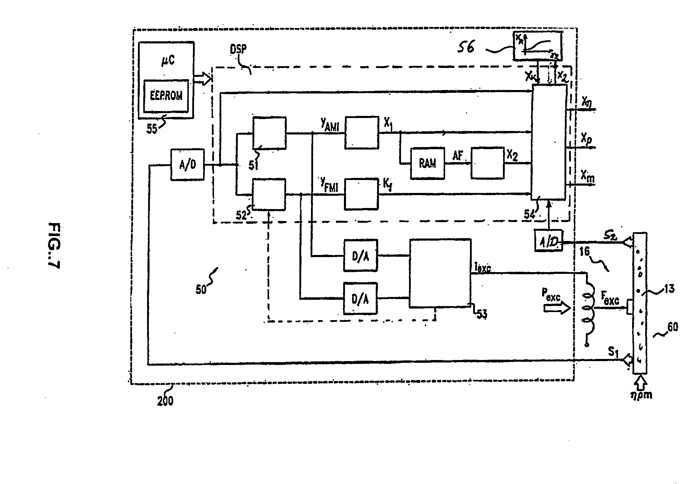

In Fig. 1 ist perspektivisch ein Coriolis-Massedurchfluß-Meßgerät 1 dargestellt, das dazu dient, einen Massendurchfluß $m$ eines in einer- hier aus Übersichtlichkeitsgründen nicht dargestellten - Rohrleitung strömenden Mediums zu erfassen und in einen diesen Massendurchfluß momentan repräsentierenden Massendurchfluß-Messwert $X_m$ abzubilden. Medium kann praktisch jeder strömungsfähige Stoff sein, beispielsweise eine Flüssigkeit, ein Gas, ein Dampf oder dergleichen. Darüberhinaus kann das Coriolis-Massedurchfluß-Meßgerät 1 ggf. auch dazu verwendet werden eine Dichte p und/oder eine Viskosität η des Mediums zu messen. Das Coriolis-Massedurchfluß-Meßgerät 1 umfaßt dafür einen im Betrieb vom zu messenden Medium durchströmten Messaufnehmer 10 vom Vibrationstyp, von dem ein Ausführungsbeispiele und Ausgestaltungen in den Fig. 2 bis 6 gezeigt sind, sowie eine, wie in Fig. 2 und 7 schematisch dargestellt, mit dem Messaufnehmer 10 elektrisch verbundene Messgerät-Elektronik 50. Vorzugsweise ist die Messgerät-Elektronik 50 ferner so ausgelegt, daß sie im Betrieb des Coriolis-Massedurchfluß-Meßgerät 1 mit einer diesem übergeordneten Messwertverarbeitungseinheit, beispielsweise einer speicherprogrammierbaren Steuerung (SPS), einem Personalcomputer und/oder einer Workstation, via Datenübertragungssystem, beispielsweise einem Feldbussystem, Meß- und/oder andere Betriebsdaten austauschen kann. Des weiteren ist die Messgerät-Elektronik 50 so ausgelegt, dass sie von einer externen Energieversorgung, beispielsweise auch über das vorgenannte Feldbussystem, gespeist werden kann. Für den Fall, daß das Vibrations-Meßgerät für eine Ankopplung an ein Feldbus- oder ein anderes Kommunikationssystem vorgesehen ist, weist die, insb. programmierbare, Meßgerät-Elektronik 50 eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf. Zur Unterbringung der Messgerät-Elektronik 50 ist ferner ein, insb. von außen direkt am Messaufnehmer 10 angebrachtes oder aber von diesem abgesetztes, Elektronikgehäuse 200 vorgesehen.

Wie bereits erwähnt, umfasst das Meßgerät einen Meßaufnehmer vom Vibrationstyp der im Betrieb vom zu messenden Medium durchströmt ist, und der dazu dient, in einem hindurchströmenden Medium solche mechanische Reaktionskräfte, insb. vom Massendurchfluß abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können so in der dem Fachmann bekannten Weise z.B. der Massendurchfluß, die Dichte und/oder die Viskosität des Mediums gemessen werden.

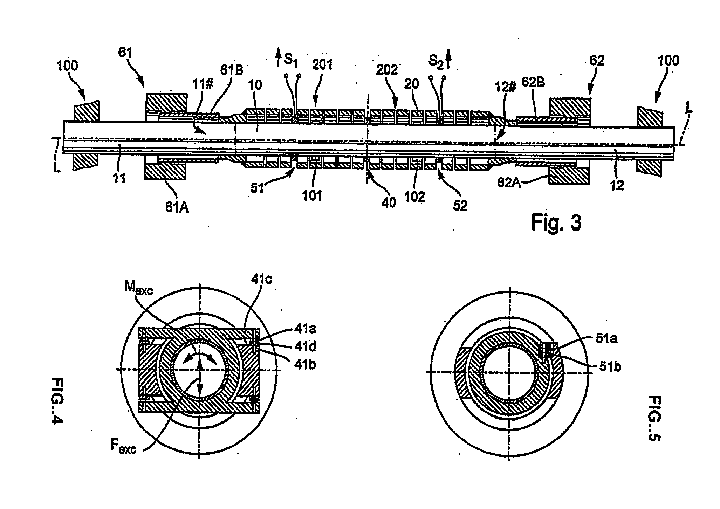

In den Fig. 3 und 4 ist ein Ausführungsbeispiel einer als Messaufnehmer 10 vom Vibrations-Typ gezeigt dienenden physikalisch-elektrischen Wandleranordnung schematisch dargestellt. Der mechanische Aufbau und die Funktionsweise einer derartigen Wandleranordnung ist dem Fachmann an und für sich bekannt und z.B. auch in der US-B 66 91 583, der WO-A 03/095949 oder der WO-A 03/095950 detailliert beschrieben.

Zum Führen des Mediums und zum Erzeugen besagter Reaktionskräfte umfaßt der Meßaufnehmer wenigstens ein im wesentlichen gerades Meßrohr 10 von vorgebbarem Messrohrdurchmesser, das im Betrieb zumindest zeitweise ein- oder mehrfrequent vibrieren gelassen und dadurch wiederholt elastisch verformt wird. Elastisches Verformen des Messrohrlumens bedeutet hier, dass eine Raumform und/oder eine Raumlage des Messrohriumens innerhalb eines Elastizitätsbereiches des Messrohrs 10 in vorgebbarer Weise zyklisch, insb. periodisch, verändert wird, vgl. hierzu auch die US-A 48 01 897, die US-A 56 48 616, die US-A 57 96 011, die US-A 60 06 609, die US-B 66 91 583, die WO-A 03/095949 und/oder die

WO-A 03/095950. Es sei an dieser Stelle darauf verwiesen, daß, obwohl der Meßaufnehmer im Ausführungsbeispiel lediglich ein einziges, gerades Meßrohr umfaßt, zur Realisierung der Erfindung anstelle des gezeigten Messaufnehmers eine Vielzahl anderer im Stand der Technik beschriebener Coriolis-Massendurchfluß-Messaufnehmer verwendet werden kann. Im besonderen eigenen sich beispielsweise Meßaufnehmer vom Vibrationstyp mit zwei parallel vom zu messenden Medium durchflossenen, geraden Meßrohren, wie sie beispielsweise auch in der US-A 56 02 345 detailiert beschrieben sind.

Das Messrohr 10, das in der üblichen Weise einlass-seitig und auslass-seitig mit der das zu messende Medium zu- bzw. abführenden Rohrleitung kommuniziert, ist in einen starren, insb. biege- und verwindungssteifen, Tragrahmen 14 schwingfähig eingespannt. Anstelle des hier gezeigten rohrförmigen, koaxial zum Messrohr verlaufenden Tragrahmens 14 können selbstverständlich auch andere geeignete Trägermittel, wie z.B. parallel zum Meßrohr verlaufende Rohre oder kastenförmigen Strukturen, verwendete werden. Zum Hindurchströmenlassen des Mediums ist das Meßrohr 10 über ein in ein Einlaßende 11# einmündendes Einlaßrohrstück 11 und über ein in ein Auslaßende 12# einmündendes Auslaßrohrstück 12 an die Rohrleitung angeschlossen. Meßrohr 10, Einlaß- und Auslaßrohrstück 11, 12 sind zueinander und zu einer gedachten Meßrohrlängsachse L möglichst fluchtend ausgerichtet und in vorteilhafter Weise einstückig ausgeführt, so daß zu deren Herstellung z.B. ein einziges rohrförmiges Halbzeug dienen kann; falls erforderlich können Meßrohr 10 und Rohrstücke 11, 12 aber auch mittels einzelner, nachträglich zusammengefügter, z.B. zusammengeschweißter, Halbzeuge hergestellt werden. Zur Herstellung des Meßrohrs 10, wie auch des Einlaß- und des Auslaßrohrstücks 11, 12 kann praktisch jedes der für solche Meßaufnehmer üblichen Materialien verwendet werden, wie z.B. Eisen-, Titan-, Zirkonium- und/oder Tantal-Legierungen, Kunststoffe oder Keramiken. Für den Fall, daß der Meßaufnehmer lösbar mit der Rohrleitung zu montieren ist, ist dem Einlaßrohrstück 11 und dem Auslaßrohrstück 12 bevorzugt jeweils ein erster bzw. zweiter Flansch 13, 14 angeformt; falls erforderlich können Ein-und Auslaßrohrstück 11, 12 aber auch direkt mit der Rohrleitung, z.B. mittels Schweißen oder Hartlötung, verbunden werden. Ferner ist, wie in den Fig. 1 schematisch dargestellt, am ein Ein- und am Auslaßrohrstück 11, 12 fixiertes, das Meßrohr 10 aufnehmendes Wandlergehäuse 100 vorgesehen, vgl. hierzu Fig. 1 und 2.

Zum Messen des Massendurchflusses wird das Messrohr 10 in einem ersten Schwingungsmode, dem sogenannten Nutzmode, angeregt, bei dem es zumindest anteilig Schwingungen, insb. Biegeschwingungen, lateral zur Meßrohrlängsachse L ausführt, insb. so, daß es sich, im wesentlichen auf einer natürlichen Biege-Eigenfrequenz schwingend, gemäß einer natürlichen ersten Eigenschwingungsform lateral ausbiegt. Natürliche Eigenfrequenzen solcher Lateralschwingungsmoden von Meßrohren sind bekanntermaßen im besonderen Maße auch von der Dichte $\rho$ des Mediums abhängig.

Für den Fall, daß das Medium in der angeschlossenen Rohrleitung strömt und somit der Massendurchfluß $m$ von Null verschieden ist, werden mittels des im Nutzmode schwingenden Meßrohrs 10 im hindurchströmenden Medium Corioliskräfte induziert. Diese wiederum wirken auf das Meßrohr 10 zurück und bewirken so in der dem Fachmann bekannten Weise eine zusätzliche, sensorisch erfaßbare Verformung des Meßrohrs 10 im wesentlichen gemäß einer natürlichen zweiten Eigenschwingungsform, die der ersten Eigenschwingungsform koplanar überlagert ist. Die momentane Ausprägung der Verformung des Meßrohrs 10 ist dabei, insb. hinsichtlich ihrer Amplituden, auch vom momentanen Massendurchfluß $m$ abhängig. Als zweite Eigenschwingungsform, dem sogenannten Coriolismode, können z.B., wie bei derartigen Meßaufnehmern üblich, anti-symmetrische Biegeschwingungsformen mit zwei Schwingungsbäuchen oder mit vier Schwingungsbäuchen dienen.

Nach einer Ausgestaltung der Erfindung wird das Meßrohr 10 zum Erzeugen von massedurchflussabhängigen Corioliskräften im strömenden Medium zumindest zeitweise mit einer Lateralschwingungs-Frequenz $f_{excL}$ angeregt, die möglichst genau einer niedrigsten natürlichen Biege-Eigenfrequenz des Meßrohrs 10 entspricht, so daß also das lateral schwingende, jedoch nicht vom Fluid durchströmte Meßrohr 10 bezüglich einer zur Meßrohrlängsachse L senkrechten Mittelachse im wesentlichen symmetrisch ausgebogen wird und dabei einen einzigen Schwingungsbauch aufweist. Diese niedrigste Biege-Eigenfrequenz kann beispielsweise bei einem als Meßrohr 10 dienenden Edelstahlrohr mit einer Nennweite von 20 mm, einer Wandstärke von etwa 1,2 mm und einer Länge von etwa 350 mm sowie den üblichen Anbauten bei etwa 850 Hz bis 900 Hz liegen.

Nach einer weiteren Ausgestaltung der Erfindung wird das Meßrohr 10 zum Erzeugen von viskositätsabhängigen Scherkräften im strömenden Medium zumindest zeitweise, insb. simultan zu den Lateralschwingungen im Nutzmode, mit einer Torsionsschwingungs-Frequenz $f_{excT}$, die möglichst genau einer natürlichen Torsions-Eigenfrequenz des Meßrohrs 10 entspricht, so angeregt, daß es im wesentlichen gemäß einer natürlichen Torsionsschwingungsform um seine Längsachse L verdrillt wird, vgl. hierzu z.B. auch die US-A 45 24 610, die US-A 52 53 533, die US-A 60 06 609 oder die EP-A 1 158 289. Eine niedrigste Torsions-Eigenfrequenz kann beispielsweise bei einem geraden Meßrohr etwa im Bereich des Doppelten der niedrigsten Biege-Eigenfrequenz liegen.

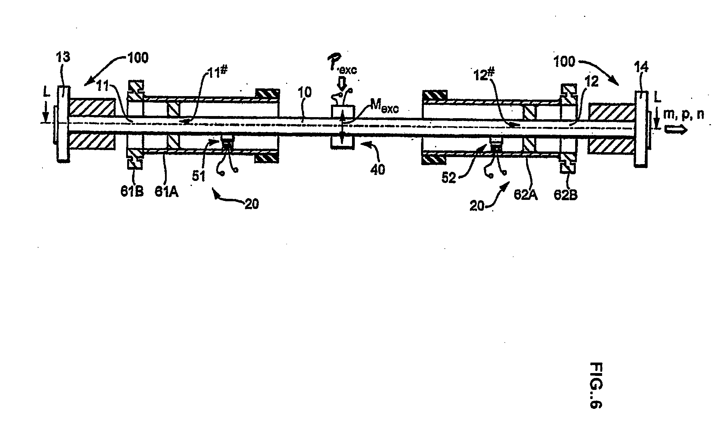

Wie bereits erwähnt, werden die Schwingungen des Messrohrs 11 einerseits durch eine, insb. zum Zwecke der Viskositätsmessung, sensorisch erfaßte Energieabgabe an das Medium bedämpft. Andererseits aber kann dem vibrierenden Meßrohr 10 auch dadurch Schwingungsenergie entzogen werden, daß mit diesem mechanisch gekoppelte Bauteile, wie z.B. das Wandlergehäuse 100 oder die angeschlossene Rohrleitung, ebenfalls zu Schwingungen angeregt werden. Während die, wenn auch unerwünschte, Energieabgabe an das Wandlergehäuse 100 noch kalibrierbar wäre, so erfolgt jedoch zumindest die Energieabgabe an die Umgebung des Meßaufnehmers, insb. die Rohrleitung, in einer praktisch nicht mehr reproduzier- oder sogar nicht vorherbestimmbaren Weise. Zum Zwecke der Unterdrückung oder Vermeidung einer allfälligen Abgabe von Schwingungsenergie an die Umgebung ist daher im Meßaufnehmer ferner ein einlaßseitig und auslaßseitig am Meßrohr 10 fixierter Gegenschwinger 20 vorgesehen. Der Gegenschwinger 20 ist, wie in den Fig. 2 schematisch dargestellt, bevorzugt einstückig ausgeführt. Falls erforderlich, kann der Gegenschwinger 20 auch, wie z.B. auch in der US-A 59 69 265, der EP-A 317 340 oder der WO-A 00 14 485 gezeigt, mehrteilig zusammengesetzt oder mittels zweier separater, einlaß- bzw. auslaßseitig am Meßrohr 10 fixierter Teil-Gegenschwinger realisiert sein, vgl. Fig. 6. Der Gegenschwinger 20 dient u.a. dazu, den Meßaufnehmer für wenigstens einen vorherbestimmten, z.B. einen im Betrieb des Meßaufnehmers am häufigsten zu erwartenden oder auch kritischen Mediumsdichtewert soweit dynamisch auszubalancieren, daß im vibrierenden Meßrohr 10 allfällig erzeugte Querkräfte und/oder Biegemomente weitgehend kompensiert werden, vgl. die hierzu auch die US-B 66 91 583. Darüberhinaus dient der Gegenschwinger 20 für den oben beschriebenen Fall, daß das Meßrohr 10 im Betrieb auch zu Torsionsschwingungen angeregt wird, außerdem dazu, solche Torsions-Momente, die vom vorzugsweise um seine Längsachse L tordierenden einzigen Meßrohr 10 erzeugt werden, weitgehend kompensierende Gegen-Torsionsmomente zu erzeugen und somit die Umgebung des Meßaufnehmers, insb. aber die angeschlossene Rohrleitung, weitgehend frei von dynamischen Torsionsmomenten zu halten. Der Gegenschwinger 20 kann, wie in den Fig. 2 und 3 schematisch dargestellt, rohrförmig ausgeführt und beipielsweise so am Einlaßende 11# und am Auslaßende 12# mit dem Meßrohr 10 verbunden sein, daß er, wie in Fig. 3 gezeigt, im wesentlichen koaxial zum Meßrohr 10 ausgerichtet ist. Als Material für den Gegenschwinger 20 kommen praktisch dieselben Materialien in Frage, wie sie auch für das Meßrohr 10 verwendbar sind, also beispielsweise Edelstahl, Titan-Legierungen etc. Ferner weist der Meßaufnehmer 1 ein Meßrohr 10 und Gegenschwinger 20 umgebendes Meßaufnehmer-Gehäuse 100 auf, das diese vor schädlichen Umgebungseinflüssen schützt und/oder der allfällige Schallemissionen des Meßaufnehmers nach außen hin dämpft. Das Meßaufnehmer-Gehäuse 100 ist im hier gezeigten Ausführungsbeispiel an einem Einlaßende des Einlaßrohrstücks sowie an einem Auslaßende des Auslaß-Rohrstücks fixiert, so dass Messrohr und Gegenschwinger schwingfähig im Meßaufnehmer-Gehäuse 100 aufgehängt sind. Überdies ist das Meßaufnehmer-Gehäuse 100 mit einem halsartigen Übergangsstück versehen, an dem das die Meßgerät-Elektronik 50 einhausende Elektronik-Gehäuse 200 fixiert ist, vgl. Fig. 1.

Der, insb. im Vergleich zum Meßrohr 10 etwas weniger torsions-und/oder biege-elastische, Gegenschwinger 20 wird im Betrieb gleichfalls schwingen gelassen, und zwar im wesentlichen gleichfrequent, jedoch außerphasig, insb. gegenphasig, zum Meßrohr 10. Dementsprechend ist der Gegenschwinger 20 mit wenigstens einer seiner Torsisons-Eigenfrequenzen möglichst genau auf jene Torsions-Schwingungsfrequenzen abgestimmt, mit der dieses im Betrieb vorwiegend schwingen gelassen wird. Darüber hinaus ist der Gegenschwinger 20 auch in wenigstens einer seiner Biege-Eigenfrequenz zu wenigstens einer Biege-Schwingungsfrequenz mit der das Messrohr 10, insb. im Nutzmode, schwingen gelassen wird möglichst gleich eingestellt und wird der Gegenschwinger 20 im Betrieb des Meßaufnehmers auch zu Lateralschwingungen, insb. Biegeschwingungen, angeregt, die im wesentlichen koplanar zu Lateralschwingungen des Meßrohrs 10, insb. den Biegeschwingungen des Nutzmodes, ausgebildet sind.

Nach einer Ausgestaltung der Erfindung sind dafür, wie in Fig. 3 schematisch dargestellt, im Gegenschwinger 20 eingearbeitete Nuten 201, 202 vorgesehen, die eine genaues Einstellen von dessen Torsions-Eigenfrequenzen, insb. ein Absenken der Torsions-Eigenfrequenzen durch Absenken einer Torsions-Steifigkeit des Gegenschwingers 20, auf einfache Weise ermöglichen. Obwohl die Nuten 201, 202 in der Fig. 2 oder 3 in Richtung der Längsachse L im wesentlichen gleichverteilt gezeigt sind, können sie, falls erforderlich, ohne weiteres auch in Richtung der Längsachse L ungleich verteilt angeordnet sein. Darüber hinaus kann die Massenverteilung des Gegenschwingers, wie ebenfalls in Fig. 3 schematisch dargestellt, auch mittels entsprechender Massenausgleichskörper 101, 102 korrigiert werden, die am Meßrohr 10 fixiert sind. Als Massenausgleichskörper 101, 102 können z.B. auf das Meßrohr 10 aufgeschobene Metallringe oder an diesem fixierte Metallplättchen dienen.

Zum Erzeugen mechanischer Schwingungen des Meßrohrs 10 umfaßt der Meßaufnehmer ferner eine, insb. elektrodynamische, Erregeranordnung 40, die mit dem Messrohr gekoppelt ist. Die Erregeranordnung 40 dient dazu, eine von der Meßgerät-Elektronik eingespeiste, elektrische Erregerleistung $P_{exc}$, z.B. mit einem geregelten Erregerstrom $i_{exc}$ und/oder einer geregelten Spannung, in ein auf das Meßrohr 10, z.B. pultförmig oder harmonisch, einwirkendes und dieses elastisch verformendes Erregermoment $M_{exc}$ und/oder in eine lateral auf das Messrohr 10 wirkende Erregerkraft $F_{exc}$ umzuwandeln. Zur Erzielung eines möglichst hohen Wirkungsgrades und eines möglichs hohen Signal/Rausch-Verhältnisses ist die Erregerleistung $P_{exc}$ möglichst genau so eingestellt, dass überwiegend die Schwingungen des Messrohrs 10 im Nutzmode aufrecht erhalten werden, und zwar möglichst genau auf einer momentanen Eigenfrequenz des vom Medium durchströmten Meßrohrs. Die Erregerkraft $F_{exc}$ wie auch das Erregermoment $M_{exc}$ können dabei, wie in den Fig. 4 oder 6 schematisch dargestellt, jeweils bidirektional oder aber auch unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 40 kann, wie bei solchen Meßaufnehmern vom Vibrationstyp üblich, beispielsweise eine Tauchspulenanordnung mit einer am Gegenschwinger 20 oder von innen am Wandlergehäuse 100 befestigten zylindrischen Erregerspule, die im Betrieb von einem entsprechenden Erregerstrom $i_{exc}$ durchflossen ist, und mit einem in die Erregerspule zumindest teilweise eintauchenden dauermagnetischen Anker, der am Meßrohr 10 fixiert ist, dienen. Ferner kann die Erregeranordnung 40 auch, wie z.B. in der US-A 45 24 610 oder der WO-A 03/095950 gezeigt, mittels mehrer Tauchspulen oder auch mittels Elektromagneten realisiert sein.

Zum Detektieren der Schwingungen des Messrohrs 11 umfasst der Messaufnehmer 10 ferner eine Sensoranordnung 60, die mittels wenigstens eines auf Vibrationen des Messrohrs 10 reagierenden ersten Schwingungssensors 17 ein diese repräsentierendes erstes, insb. analoges, Schwingungsmeß-Signal s1 erzeugt. Der Schwingungsensor 17 kann z.B. mittels eines dauermagnetischen Ankers gebildet sein, der am Messrohr 10 fixiert ist und mit einer vom Gegenschwinger 20 oder vom Wandierghäuse gehalterten Sensorspule in Wechselwirkung steht. Als Schwingungsensor 17 sind besonders solche Sensoren geeignet, die, basierend auf dem elektrodynamischen Prinzip, eine Geschwindigkeit der Auslenkungen des Messrohrs 10 erfassen. Es können aber auch beschleunigungsmessende elektrodynamische oder aber auch wegmessende resistive oder optische Sensoren verwendet werden. Selbstverständlich können auch andere dem Fachmann bekannte und für die Detektion solcher Vibrationen geeignete Sensoren verwendet werden. Die Sensoranordnung 60 umfasst ferner einen, insb. zum ersten Schwingungssensor 17 identischen, zweiten Schwingungssensor 18, mittels dem sie ein ebenfalls Vibrationen des Messrohrs 10 repräsentierendes zweites Schwingungsmeß-Signal s2 liefert. Die beiden Schwingungssensor 17, 18 sind bei dieser Ausgestaltung entlang des Messrohrs 10 voneinander beabstandet, insb. in einem gleichen Abstand von der Mitte des Messrohrs 10, so im Messaufnehmer 10 angeordnet, dass mittels der Sensoranordnung 60 sowohl einlassseitige als auch auslassseitige Vibrationen des Messrohrs 10 örtlich erfasst und in die entsprechenden Schwingungsmeß-Signale s1 bzw. s2 umgewandelt werden. Beide Schwingungsmeß-Signale s1, s2, die üblicherweise jeweils eine einer momentanen Schwingfrequenz des Messrohrs 10 entsprechende Signalfrequenz aufweisen, sind, wie in Fig. 2 gezeigt, der Messgerät-Elektronik 50 zugeführt, wo sie in der dem Fachmann bekannten Weise mittels einer entsprechenden vorverarbeitet, insb. digitalisiert, und anschließen geeignet ausgewertet werden.

Nach einer Ausgestaltung der Erfindung ist die Erregeranordnung 40, wie auch in Fig. 2 und 3 gezeigt, so ausgebildet und im Meßaufnehmer angeordnet, daß sie im Betrieb gleichzeitig, insb. differentiell, auf Meßrohr 10 und Gegenschwinger 20 wirkt. Bei dieser Weiterbildung der Erfindung ist die Erregeranordnung 40, wie auch in Fig. 2 gezeigt, in vorteilhafter Weise so ausgebildet und so im Meßaufnehmer angeordnet, daß sie im Betrieb gleichzeitig, insb. differentiell, auf Meßrohr 10 und Gegenschwinger 20 wirkt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41 c fixiert ist und über diesen und einen von außen am Gegenschwinger 20 fixierten Anker 41 b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41 a, insb. auch bei der Montage, leicht zugänglich ist. Darüber hinaus besteht eine weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 fixierbar sind und somit praktisch keinen Einfluß auf die Eigenfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41 b vom Meßrohr 10 gehaltert werden können.

In entsprechender Weise können auch die Schwingungssensoren 17, 18 so ausgelegt und im Meßaufnehmer angeordnet sein, daß durch sie die Vibrationen von Meßrohr 10 und Gegenschwinger 20 differentiell erfaßt werden. Im in der Fig. 5 gezeigten Ausführungsbeispiel umfaßt die Sensoranordnung 50 eine am Meßrohr 10 fixierte, hier außerhalb sämtlicher Trägheitshauptachsen der Sensoranordnung 50 angeordnete, Sensorspule 51a. Die Sensorspule 51a ist möglichst nah zu einem am Gegenschwinger 20 fixierten Anker 51 b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund einer solchen Anordnung der Sensorspule 51a können in vorteilhafter Weise gleichzeitig sowohl die oben genannten Torsionsschwingungen als auch die angeregten Biegeschwingungen erfaßt werden. Falls erforderlich können die Sensorspule 51a dazu aber auch am Gegenschwinger 20 und in entsprechender Weise der mit dieser gekoppelte Anker 51 b am Meßrohr 10 fixiert sein.

Nach einer anderen Ausgestaltung der Erfindung sind Meßrohr 10, Gegenschwinger 20 sowie die daran befestigten Sensor- und Erregeranordnungen 40, 50 hinsichtlich ihrer Massenverteilung so aufeinander abgestimmt, daß das so gebildete, mittels des Ein- und am Auslaßrohrstücks 11, 12 aufgehängte Innenteil des Meßaufnehmers einen Massenschwerpunkt MS aufweist, der zumindest innerhalb des Meßrohrs 10, vorzugsweise aber möglichst nah an der Meßrohrlängsachse L liegt. Zudem ist das Innenteil in vorteilhafter Weise so ausgebildet, daß es eine mit dem Einlaßrohrstück 11 und dem Auslaßrohrstück 12 fluchtende und zumindest abschnittsweise innerhalb des Meßrohrs 10 liegende erste Trägheitshauptachse $T_1$ aufweist. Aufgrund der Verlegung des Massenschwerpunktes MS des Innenteils, insb. aber auch aufgrund der vorbeschriebenen Lage der ersten Trägheitshauptachse $T_1$ sind die beiden betriebsgemäß vom Meßrohr 10 eingenommenen und vom Gegenschwinger 20 weitgehend kompensierten Schwingungsformen, nämlich die Torsionsschwingungen und die Biegeschwingungen des Meßrohrs 10, mechanisch voneinander weitestgehend entkoppelt, vgl. hierzu auch die WO-A 03/095950. Dadurch können beide Schwingungsformen, also Lateralschwingungen und/oder Torsionsschwingungen, in vorteilhafter Weise ohne weiteres voneinander getrennt angeregt werden. Sowohl die Verlegung des Massenschwerpunkts MS als auch der ersten Trägheitshauptachse $T_1$ hin zur Meßrohrlängsachse L kann beispielsweise dadurch erheblich vereinfacht werden, daß das Innenteil, also Meßrohr 10, Gegenschwinger 20 sowie die daran befestigten Sensor- und Erregeranordnungen 50, 40, so ausgebildet und zueinander angeordnet sind, daß eine Massenverteilung des Innenteils entlang der Meßrohrlängsachse L im wesentlichen symmetrisch, zumindest aber invariant gegenüber einer gedachten Drehung um die Meßrohrlängsachse L um 180° (c2-Symmetrie), ist. Zu dem ist der - hier rohrförmig, insb. auch weitgehend axial-symmetrisch, ausgebildete - Gegenschwinger 20 im wesentlich koaxial zum Meßrohr 10 angeordnet, wodurch das Erreichen einer symmetrische Massenverteilung des Innenteils erheblich vereinfacht wird  und somit auch der Massenschwerpunkt MS in einfacher Weise nah zur Meßrohrlängsachse L hin verlegt wird. Darüber hinaus sind auch die Sensor- und Erregeranordnungen 50, 40 im Ausführungbeispiel so ausgebildet und zueinander am Meßrohr 10 und ggf. am Gegenschwinger 20 angeordnet, daß ein durch sie erzeugtes Massenträgheitsmoment möglichst konzentrisch zur Meßrohrlängsachse L ausgebildet oder zumindest möglichst klein gehalten ist. Dies kann z.B. dadurch erreicht werden, daß ein gemeinsamer Massenschwerpunkt von Sensor- und Erregeranordnung 50, 40 ebenfalls möglichst nah an der Meßrohrlängsachse L liegt und/oder daß eine Gesamtmasse von Sensor-und Erregeranordnung 50, 40 möglichst klein gehalten ist.

Nach einer weiteren Ausgestaltung der Erfindung ist die Erregeranordnung 40 zum Zwecke der getrennten Anrregung von Torsions- und/oder Biegeschwingungen des Meßrohrs 10 so ausgebildet und an diesem und am Gegenschwinger 20 so fixiert, daß eine die Biegeschwingungen erzeugende Kraft entlang einer gedachten Kraftlinie auf das Meßrohr 10 wirkt, die außerhalb einer zur ersten Trägheitshauptachse $T_1$ senkrechten zweiten Trägheitshauptachse $T_2$ verläuft oder letztere in höchstens einem Punkt schneidet. Vorzugsweise ist das Innenteil so ausgestaltet, daß die zweite Trägheitshauptachse $T_2$ im wesentlichen mit der oben erwähnten Mittelachse übereinstimmt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41 c fixiert ist und über diesen und einen von außen am Gegenschwinger 20 fixierten Anker 41 b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht eine weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 zu fixieren sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41 b vom Meßrohr 10 gehaltert werden können.

Nach einer weiteren Ausgestaltung der Erfindung weist die Erregeranordnung 40 wenigstens eine entlang eines Durchmessers des Meßrohrs 10 angeordnete zweite Erregerspule 42a auf die in gleicher Weise wie die Erregerspule 41a mit dem Meßrohr 10 und dem Gegenschwinger 20 gekoppelt ist. Nach einer anderen bevorzugten Ausgestaltung der Erfindung weist die Erregeranordnung zwei weitere, insgesamt also vier zumindest bezüglich der zweiten Trägheitshauptachse $T_2$ symmetrisch angeordnete Erregerspulen 43a, 44a auf, die alle in der vorgenannten Weise im Meßaufnehmer montiert sind. Die außerhalb der zweiten Trägheitshauptachse $T_2$ auf das Meßrohr 10 einwirkende Kraft kann mittels solcher Zwei- oder Vier-Spulen-Anordnungen in einfacher Weise z.B. dadurch erzeugt werden, daß eine der Erregerspulen, z.B. die Erregerspule 41 a, eine andere Induktivität aufweist als die jeweils anderen oder daß eine der Erregerspulen, z.B. die Erregerspule 41a, im Betrieb von einem Erregerteilstrom durchflossen ist, der von einem jeweiligen Erregerteilstrom der jeweils anderen Erregerspulen verschieden ist. Nach einer anderen Ausgestaltung der Erfindung umfaßt die Sensoranordnung 50, wie in Fig. 5 schematisch dargestellt, eine außerhalb der zweiten Trägheitshauptachse $T_2$ angeordnete, am Meßrohr 10 fixierte Sensorspule 51a. Die Sensorspule 51a ist möglichst nah zu einem am Gegenschwinger 20 fixierten Anker 51 b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund der erfindungsgemäßen Anordnung der Sensorspule 51a können in vorteilhafter Weise gleichzeitig sowohl die oben genannten Torsionsschwingungen als auch die ggf. angeregten Biegeschwingungen erfaßt werden. Falls erforderlich können die Sensorspule 51a dazu aber auch am Gegenschwinger 20 und in entsprechender Weise der mit dieser gekoppelte Anker 51 b am Meßrohr 10 fixiert sein.

Es sei an dieser Stelle ferner erwähnt, daß die Erregeranordnung 40 und die Sensoranordnung 50 in der dem Fachmann bekannten Weise in ihrem mechanischen Aufbau auch im wesentlich gleich ausgeführt sein können; somit lassen sich die vorgenannten Ausgestaltungen des mechanischen Aufbaus der Erregeranordnung 40 im wesentlichen auch auf den mechanischen Aufbau der Sensoranordnung 50 übertragen und umgekehrt.

Zum Vibrierenlassen des Messrohrs 10 wird die Erregeranordnung 40, wie bereits erwähnt, mittels eines gleichfalls, insb. mehrfrequent, oszillierenden Erregerstroms $i_{exe}$ von einstellbarer Amplitude und von einstellbarer Erregerfrequenz $f_{exc}$ derart gespeist, dass die Erregerspulen 26, 36 im Betrieb von diesem durchflossen sind und in entsprechender Weise die zum Bewegen der Anker 27, 37 erforderlichen Magnetfelder erzeugt werden. Der Erregerstrom $i_{exc}$ kann z.B. harmonisch, mehrfrequent oder auch rechteckförmig sein. Die Lateralschwingungs-Erregerfrequenz $f_{excL}$ eines zum Aufrechterhalten der Lateralschwingungen des Meßrohrs 10 erforderlichen Lateral-Stromanteils $i_{excL}$ vom Erregerstrom kann beim im Ausführungsbeispiel gezeigten Meßaufnehmer in vorteilhafter Weise so gewählt und eingestellt sein, daß das lateral schwingende Messrohr 10 möglichst in einem Biegeschwingungsgrundmode mit einem einzigen Schwingungsbauch oszilliert. Analog dazu ist auch eine Torsionsschwingungs-Erregerfrequenz $f_{excT}$ zum Aufrechterhalten der Torsionsschwingungen des Meßrohrs 10 erforderlichen Torsions-Stromanteils $i_{excT}$ vom Erregerstrom $i_{exc}$ beim im Ausführungsbeispiel gezeigten Meßaufnehmer in vorteilhafter Weise so gewählt und eingestellt, daß das torsional schwingende Messrohr 10 möglichst in seinem Torsionsschwingungs-Grundmode mit einem einzigen Schwingungsbauch oszilliert.

Für den oben beschriebenen Fall, daß die Lateralschwingungs-Frequenz $f_{excL}$ und die Torsionsschwingungs-Frequenz $f_{excT}$, mit der das Messrohr im Betrieb schwingen gelassen wird, voneinander verschieden eingestellt sind, kann mittels des Messaufnehmers in einfacher und vorteilhafter Weise auch bei simultan angeregten Torsions- und Biegeschwingungen, z.B. basierend auf einer Signalfilterung oder einer Frequenzanalyse, eine Separierung der einzelnen Schwingungsmoden sowohl in den Erreger- als auch in den Sensorsignalen erfolgen.

Zum Erzeugen und Einstellen des Erregerstroms $i_{exc}$ umfaßt die Meßgerät-Elektronik 50 eine entsprechende Treiberschaltung 53, die von einem die einzustellende Lateralschwingungs-Erregerfrequenz $f_{excL}$ repräsentierenden Lateralschwingungs-Frequenzstellsignal $y_{FML}$ und von einem die einzustellende Lateralschwingungs-Amplitude des Erregerstroms $i_{exc}$ und/oder des Lateral-Stromanteüs $i_{excL}$ repräsentierenden Lateralschwingungs-Amplitudenstellsignal $y_{AML}$ sowie zumindest zeitweise von einem von einem die einzustellende Torsionsschwingungs-Erregerfrequenz $f_{excT}$ repräsentierenden Torsionsschwingungs-Frequenzstellsignal $y_{FMT}$ und von einem die einzustellende Torsionsschwingungs-Amplitude des Erregerstroms $i_{exc}$ und/oder des Torsions-Stromanteils $i_{excT}$ repräsentierenden Torsionsschwingungs-Amplitudenstellsignal $y_{AMT}$ gesteuert ist. Die Treiberschaltung 53 kann z.B. mittels eines spannungsgesteuerten Oszillators und eines nachgeschalteten Spannungs-zu-Stromwandler realisiert sein; anstelle eines analogen Oszillators kann aber z.B. auch ein numerisch gesteuerter digitaler Oszillator zum Einstellen des momentanen Erregerstroms $i_{exc}$ oder der Anteile $i_{excL}$, $i_{excT}$ des Erregerstroms verwendet werden.

Zum Erzeugen des Lateralschwingungs-Amplitudenstellsignals $y_{AML}$ und/oder Torsionsschwingungs-Amplitudenstellsignals $y_{AMT}$ des kann z.B. eine in die Meßgerät-Elektronik 50 integrierte Amplitudenregelschaltung 51 dienen, die anhand momentaner Amplituden wenigstens eines der beiden Schwingunsmeßsignale $s_1$, $s_2$, gemessen bei der momentanen Lateralschwingungsfrequenz und/oder der momentanen Torsionsschwingungsfrequenz, sowie anhand entsprechender, konstanter oder variabler Amplitudenreferenzwerte für die Lateral- bzw. die Torsionsschwingungen $W_B$, $W_T$ die Amplitudenstellsignale $y_{AML}$, $y_{AMT}$ aktualisiert; ggf. können auch momentane Amplituden des Erregerstroms $i_{exc}$ zur Generierung des Lateralschwingungs-Amplitudenstellsignals $y_{AML}$ und/oder des Torsionsschwingungs-Amplitudenstellsignals $y_{AMT}$ hinzugezogen werden, vgl. Fig. 7. Aufbau und Wirkungsweise derartiger Amplitudenregelschaltungen sind dem Fachmann ebenfalls bekannt. Als ein Beispiel für eine solche Amplitudenregelschaltung sei außerdem auf Messumformer der Serie "PROMASS 80" verwiesen, wie sie von der Anmelderin beispielsweise in Verbindung mit Messaufnehmern der Serie " PROMASS I" angeboten werden. Deren Amplitudenregelschaltung ist bevorzugt so ausgeführt, daß die lateralen Schwingungen des Meßrohrs 10 auf eine konstante, also auch von der Dichte $\rho$ unabhängige, Amplitude geregelt werden.

Die Frequenzregelschaltung 52 und die Treiberschaltung 53 können z.B. als Phasen-Regelschleife ausgebildet sein, die in der dem Fachmann bekannten Weise dazu verwendet wird, anhand einer Phasendifferenz, gemessen zwischen wenigstens einem der Schwinungsmeßsignale $s_1$, $s_2$ und dem einzustellenden bzw. dem momentan gemessenen Erregerstrom $i_{exc}$, das Lateralschwingungs-Frequenzstellsignal $y_{FML}$ und/oder das Torsionsschwinguns-Frequenzstellsignal $y_{FMT}$ ständig auf die momentanen Eigenfrequenzen des Meßrohrs 10 abzugleichen. Der Aufbau und die Verwendung solcher Phasenregel-Schleifen zum Betreiben von Meßrohren auf einer ihrer mechanischen Eigenfrequenzen ist z.B. in der US-A 48 01 897 ausführlich beschrieben. Selbstverständlich können auch andere, dem Fachmann bekannte Frequenzregelschaltungen verwendet werden, wie z.B. auch in der US-A 45 24 610 oder der US-A 48 01 897 vorgeschlagen sind. Ferner sei hinsichtlich einer Verwendung solcher Frequenzregelschaltungen für Meßaufnehmer vom Vibrationstyp auf die bereits erwähnten Meßumfomer der Serie "PROMASS 80" verwiesen. Weitere als Treiberschaltung geeignete Schaltungen können beispielsweise auch der US-A 58 69 770 oder auch der US-A 65 05 519 entnommen werden.

Nach einer weiteren Ausgestaltung der Erfindung sind die Amplitudenregelschaltung 51 und die Frequenzregelschaltung 52, wie in Fig. 7 schematisch dargestellt, mittels eines in der Meßgerät-Elektronik 50 vorgesehenen digitalen Signalprozessors DSP und mittels in diesen entsprechend implementierter und darin ablaufender Programm-Codes realisiert. Die Programm-Codes können z.B. in einem nicht-flüchtigen Speicher EEPROM eines den Signalprozessor steuernden und/oder überwachenden Mikrocomputers 55 persistent oder aber auch permanent gespeichert sein und beim Starten des Signalprozessors DSP in einen, z.B. im Signalprozessors DSP integrierten, flüchtigen Datenspeicher RAM der Meßgerät-Elektronik 50 geladen werden. Für derartige Anwendungen geeignete Signalprozessoren sind z.B. solche vom Typ TMS320VC33, wie sie von der Firma Texas Instruments Inc. am Markt angeboten werden. Es versteht sich dabei praktisch von selbst, daß die Schwingungsmeßsignale $s_1$, $s_2$ für eine Verarbeitung im Signalprozessor DSP mittels entsprechender Analog-zu-digital-Wandler A/D in entsprechende Digitalsignale umzuwandeln sind, vgl. hierzu insb. die EP-A 866 319. Falls erforderlich, sind vom Signalprozessor ausgegebene Stellsignale, wie z.B. die Amplitudenstellsignale $y_{AML}$, $y_{AMT}$ oder die Frequenzstellsignale $y_{FML}$, $y_{FMT}$ ggf. in entsprechender Weise digital-zu-analog zu wandeln.

Wie in Fig. 7 dargestellt, sind die Schwingunsmeßsignale $s_1$, $s_2$ ferner einer Meßschaltung 21 der Meßgerät-Elektronik zugeführt. Die zumindest anteilig als Durchflussrechner ausgebildete Meßschaltung 21 dient dazu, in der dem Fachmann an und für sich bekannten Weise anhand einer zwischen den beiden, ggf. vorab geeignet konditionierten, Schwingungsmeßsignalen $s_1$, $s_2$ detektierten Phasendifferenz einen mit dem zu messenden Massenduchfluß korrespondierenden Massendurchfluß-Meßwert $X_m$ zu ermitteln. Als Meßschaltung 21 können hierfür herkömmliche, insb. digitale, Meßschaltungen dienen, die den Massendurchfluß anhand der Schwingungsmeßsignale $s_1$, $s_2$ ermitteln, vgl. hierzu insb. die eingangs erwähnte WO-A 02/37063, WO-A 99/39164, die US-A 56 48 616, die

US-A 50 69 074. Selbstverständlich können auch andere dem Fachmann bekannte, für Coriolis-Massedurchfluß-Meßgeräte geeignete Meßschaltungen verwendet werden, die Phasen- und/oder Zeitdifferenzen zwischen Schwingunsmeßsignalen der beschrienen Art messen und entsprechend auswerten. In vorteilhafter Weise kann die Meßschaltung 21 ebenfalls mittels des Signalprozessor DSP realisiert sein. Des weiteren dient die Meßschaltung 21 auch dazu einen Dichte-Meßwert $X\rho$ zu erzeugen, der eine Dichte $\rho$ des Mediums oder einer Mediumsphase momentan repräsentiert.

Wie bereits eingangs erwähnt, können Inhomogenitäten und/oder die Ausbildung erster und zweiter Mediumsphasen im strömenden Medium, beispielsweise in Flüssigkeiten mitgeführte Gasblasen und/oder Feststoffpartikeln, dazu führen, daß dieser in herkömmlicher Weise unter Annahme eines einphasigen und/oder homogenen Mediums ermittelte Meßwert noch nicht ausreichend genau mit dem tatsächlichen Massendurchfluß übereinstimmt, d.h. er muß dementsprechend korrigiert werden. Dieser vorab bestimmte, vorläufig den Massendurchfluß repräsentierende oder zumindest mit diesem korrespondierende Messwert, der im einfachsten Fall eine zwischen Schwingungsmeßsignalen $s_1$, $s_2$ gemessene Phasendifferenz sein kann, wird daher im folgenden als ein erster Zwischenwert $X'_m$ bezeichnet. Aus diesem erster Zwischenwert $X'_m$ wiederum wird mittels der Auswerte-Elektronik 21 schließlich der den Massedurchfluß ausreichend genau repräsentierende Massendurchfluß-Meßwert $X_m$ abgeleitet. Bereits im Stand der Technik ist hierzu diskutiert worden, daß sich solche Inhomogenitäten im Medium neben der zwischen den beiden Schwingungsmeßsignalen $s_1$, $s_2$ gemessenen Phasendifferenz auch in der Schwingungsamplitude und der Schwingungsfrequenz jedes der beiden Schwingungsmeßsignalen bzw. des Erregerstroms und somit in praktisch jedem der bei Messgeräten der beschriebenen Art üblicherweise - direkt oder indirekt -gemessen Betriebsparameter unmittelbar niederschlagen.

Dies gilt zwar im besonderen, wie auch in der WO-A 03/076880 oder der US-B 65 05 519 ausgeführt, für die bei lateral schwingendem Messrohr ermittelten Betriebsparameter; es kann aber auch für jene Betriebsparameter nicht immer ausgeschlossen werden, die bei torsional schwingendem Messrohr gemessen werden, vgl. hierzu insb. die US-A 45 24 610.

Weitergehende Untersuchungen seitens der Erfinder führten allerdings zu der überraschenden Erkenntnis, daß zwar der momentane Erregerstrom $i_{exc}$ und, damit einhergehend, eine im Betrieb des Messgerät üblicherweise ebenfalls gemessene Dämpfung der Schwingungen des Messrohrs und/oder eine im Betrieb gemessene Viskosität des Mediums in erheblichem Maße vom Grade der Inhomogenität des zwei- oder mehrphasigen Mediums und/oder einer Konzentration einer zweiten Mediumsphase desselben abhängig ist, beispielsweise also von einer Ausprägung, einer Verteilung und/oder einer Menge von in einer zu messenden Flüssigkeit mitgeführten Gasblasen und/oder Feststoffpartikeln, dass aber sowohl für Lateral- als auch für Torsionsschwingungen - zumindest in den beiden oben erwähnten Grundmoden - ein weitgehend reproduzierbarer und somit zumindest experimentell ermittelbarer Zusammenhang zwischen dem momentanen Erregerstrom $i_{exc}$ oder einem jeweils wirksamen Anteil $i_{excL}$, $i_{excT}$ desselben und dem Grade der Inhomogenität des zwei- oder mehrphasigen Mediums oder der Konzentration einer, insb. als Störung wirkenden, zweiten Mediumsphase postuliert werden kann. Ferner hat sich überraschenderweise gezeigt, dass unter Einbeziehung der tatsächlichen Viskosität des zu messenden Mediums bzw. der hauptsächlich zu messenden Mediumsphase und unter Berücksichtigung des Erregerstroms $i_{exc}$, der bekanntlich als ein Maß für eine scheinbare Viskosität oder auch ein Viskositäts-Dichte-Produkt des im Messrohr 11 geführten Mediums dienen kann, oder anhand zumindest eines für die Aufrechterhaltung der momentanen Schwingungen des Messrohrs erforderlichen Anteils vom Erregerstrom $i_{excL}$, $i_{excT}$ eine Korrektur des Zwischenwert $X'_m$ durchführbar ist.

Zum genauen Messen des Massendurchflusses auch bei zwei- oder mehrphasigem Medium wird daher im Betrieb mittels der Meßgerät-Elektronik 2 anhand des, insb. geregelten, Erregerstrom $i_{exc}$ und/oder eines Anteils $i_{excL}$, $i_{excT}$ davon ein, insb. digitaler, zweiter Zwischenwert $X_2$ gebildet, der mit einer Dämpfung der Schwingungen des Messrohrs 11 korrespondiert, die auch von einer scheinbaren Viskosität und/oder einem Viskositäts-Dichte-Produkt des im Messrohr 11 geführten Mediums abhängig ist. Des weiteren wird von der Meßschaltung 21 unter Verwendung des zweiten Zwischenwerts $X_2$ und unter Einbeziehung eines vorab geeignet ermittelten Viskositäts-Meßwerts $X\eta$, der mit der tatsächlichen Viskosität des im Messrohr 11 geführten Mediums oder zumindest mit einer für das Medium vorgegebenen Referenz-Viskosität korrespondiert, einen, insb. ebenfalls digitalen, Korrekturwert $X_K$ für den Zwischenwert $X'_m$ ermittelt. Die Korrektur des Zwischenwerts $X'_m$ anhand des Korrekturwerts $X_K$ wie auch die Generierung des Massedurchfluß-Meßwerts $X_m$ kann in der Messgerät-Elektronik beispielsweise basierend auf der mathematischen Beziehung

$$X_m = K_m \cdot \left(1 + X_K\right) \cdot X_m$$

$$(1)$$

erfolgen.

Nach einer Ausgestaltung der Erfindung wird der Korrekturwert $X_K$ mittels der Meßgerät-Elektronik basierend auf der mathematischen Beziehung

$$X_K = K_K \cdot \left(X_2 - X_\eta\right)$$

$$(2)$$

bestimmt, so dass dieser praktisch ein Maß ist für eine Abweichung $\Delta\eta$ der Viskosität $\eta$ des Mediums von einer im Betrieb anhand des Erregerstroms $i_{exc}$ und/oder eines Anteils des Erregerstroms $i_{exc}$ ermittelten scheinbaren Viskosität $\eta^*$ des im Messrohr geführten Mediums und/oder von einem im Betrieb anhand des Erregerstroms $i_{exc}$ ermittelten

Viskositäts-Dichte-Produkts $\eta p$ des im Messrohr geführten Mediums. Alternativ oder in Ergänzung dazu kann der Korrekturwert $X_K$ weiters auch basierend auf der mathematischen Beziehung

$$X_K = K_K \cdot \left(1 - \frac{X_\eta}{X_2}\right)$$

$$(3)$$

ermittelt werden. Während also in Gl. (2) der Korrekturwert $X_K$ anhand einer zwischen dem Zwischenwert $X_2$ und dem

Viskositäts-Meßwert $X_\eta$ bestehenden Differenz $\Delta\eta$ bestimmt wird, was wiederum praktisch einem absoluten Fehler zwischen den beiden Meßwerten entspricht, wird bei der Umsetzung von Gl. (3) der Korrekturwert $X_K$ anhand eines Vergleichs des zweiten Zwischenwerts $X_2$ mit dem Viskositäts-Meßwert $X_\eta$ oder auch anhand eines relativen Fehlers $\Delta\eta/\eta^*$ zwischen den beiden Meßwerten $X_2$, $X_\eta$ bestimmt. Insoweit stellt der Korrekturwert $X_K$ zumindest für ein zweiphasiges Medium auch ein Maß für eine momentane, relative oder absolute Konzentration einer ersten und einer zweiten Mediumsphase, insb. für Gasblasen in einer Flüssigkeit, dar. Neben der Generierung des Massedurchfluß-Meßwerts $X_m$ kann daher der Zwischenwert $X_2$ in vorteilhafter Weise ferner z.B. auch dazu verwendet werden, den Grad der Inhomogenität des Mediums oder davon abgeleitete Meßwerte, wie z.B. einen prozentualen Luftgehalt im Medium oder einen Volumen-, Mengen-oder Massenanteil von im Medium mitgeführten Feststoff-Partikeln, z.B. vor Ort oder in einer entfernten Leitwarte visuell wahrnehmbar, zu signalisieren.

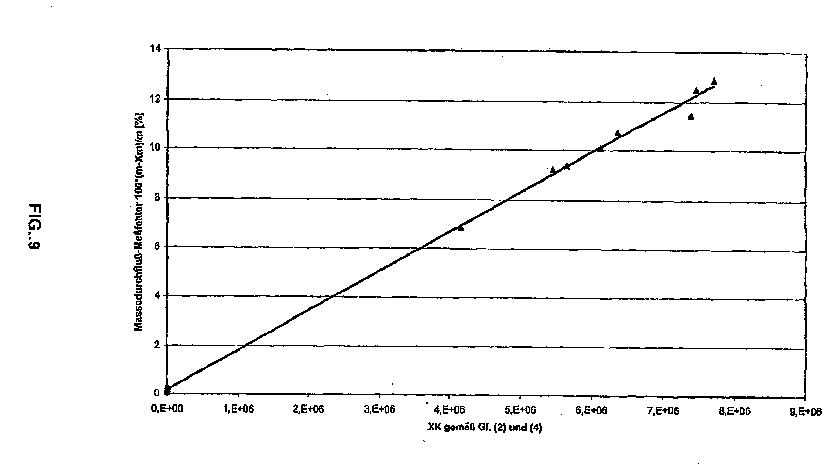

Weiterführende experimentelle Untersuchungen haben gezeigt, dass für einen Messaufnehmer gemäß dem gezeigten Ausführungsbeispiel die Berücksichtung der momentanen Lateral-Schwingungsfrequenz des vibrierenden Messrohrs zu einer weiteren Verbesserung der Genauigkeit des Massedurchfluß-Meßwerts $X_m$ führen kann. Darüber hinaus kann durch eine Normierung des gemäß der Gl. (2) oder Gl.(3) ermittelten Korrekturwerts $X_K$ auf die Quadratwurzel der momentanen Lateral-Schwingungsfrequenz erreicht werden, dass der Korrekturwert $X_K$, zumindest für den Fall, daß eine Flüssigkeit, beispielsweise Glycerin, mit eingeperlten Gasblasen, beispielsweise Luft, gemessen werden soll, im wesentlichen proportional zum Gasanteil ist, vgl. hierzu auch Fig. 9. Daher wird gemäß einer Weiterbildung der Erfindung die Gl. (2) unter Verwendung eines die momentane Lateral-Schwingungsfrequenz repräsentierenden Lateral-Schwingungsfrequenz-Meßwerts $X_{fexcL}$ folgendermaßen modifiziert:

$$X_K = K_K \cdot \frac{(X_2 - X_\eta)}{\sqrt{X_{fexcL}}}$$

$$(4)$$

Die Ermittlung des Lateral-Schwingungsfrequenz-Meßwerts kann in einfacher Weise z.B. anhand des oben erwähnten Lateralschwingungs-Frequenzstellsignals $y_{FML}$ erfolgen.

Die Dämpfung der Schwingungen des Meßrohrs 10 ist, neben dem auf die viskose Reibung innerhalb des Mediums zurückzuführenden Dämpfungsanteil bekanntlich auch durch einen vom Medium praktisch unabhängigen Dämpfungsanteil mitbestimmt. Dieser Dämpfungsanteil wird von mechanischen Reibungskräften verursacht, die z.B. in der Erregeranordnung 40 und im Material des Meßrohr 10 wirken. Anders gesagt, der momentan gemessene Erregerstrom $i_{exc}$ repräsentiert die Gesamtheit der Reibungskräfte und/oder Reibungsmomente im Meßaufnehmer 10 einschließlich der mechanischen Reibungen im Meßaufnehmer sowei der viskosen Reibung im Medium. Bei der Ermittlung des Zwischenwerts $X_2$, der, wie bereits erwähnt, vornehmlich mit dem auf viskose Reibungen im Medium zurückzuführenden Dämpfung der Schwingungen des Messrohrs korrespondieren soll, ist der vom Medium unabhängige, mechanische Dämpfungsanteil entsprechend zu berücksichtigen, insb. entsprechend zu separieren oder zu eleminieren. Zum Ermitteln des Zwischenwerts $X_2$ wird daher gemäß einer Ausgestaltung der Erfindung von einem den Erregerstrom $i_{exc}$ momentan repräsentierenden, insb. digitalen, Gesamt-Erregerstrommesswert $X_{iexc}$ und/oder von einem den Lateral-Stromanteil $i_{excL}$ momentan repräsentierenden, insb. digitalen, Lateral-Strommesswert $X_{iexcL}$ und/oder von einem den Torsions-Stromanteil $i_{excT}$ momentan repräsentierenden, insb. digitalen, Torsions-Strommesswert $X_{iexcT}$ jeweils ein entsprechend zugeordneter Gesamt-Leerstrommeßwert $K_{iexc}$, Lateral-Leerstrommesswert $K_{iexcL}$ bzw. ein Torsions-Leerstrommesswert $K_{iexcT}$ subtrahiert, von denen jeder die im momentan angeregten Schwingungsmode jeweils auftretenden mechanischen Reibungskräfte im Messaufnehmer bei entleertem Messrohr 10 repräsentiert. Jeder der Leerstrommeßwerte $K_{iexc}$, $K_{iexcL}$, $K_{iexcT}$ ist ebenfalls während einer Kalibrierung des Coriolis-Massedurchfluß-Meßgeräts, z.B. für ein evakuiertes oder ein nur Luft führendes Meßrohr 10, zu bestimmen und entsprechend in der Meßgeräte-Elektronik 50, insb. normiert auf die dabei gemessenen Schwingungsamplitude, abzuspeichern oder einzustellen. Es ist für den Fachmann ohne weiteres klar, daß falls erforderlich, andere die Leerstrommeßwerte $K_{iexc}$, $K_{iexcL}$, $K_{iexcT}$ beinflußende physikalische Parameter, wie z.B. eine momentane Temperatur des Meßrohrs und/oder des Mediums, bei deren Kalibrieren zu berücksichtigen sind. Zum Kalibrieren des Meßwerteaufnehmers 10 werden üblicherweise zwei oder mehrere verschiedene zwei-oder mehrphasige Medien mit variierenden, aber bekannten Strömungsparametern, wie z.B. bekannten Konzentrationen der einzelnen Mediumsphasen des Kalibriermediums, dessen Dichte p, Massedurchfluß m, Viskosität $\eta$ und/oder Temperatur, nacheinander durch den Meßaufnehmer 10 hindurchströmen gelassen und die entsprechenden Reaktionen des Meßwerteaufnehmers 10, wie z.B. der momentane Erregerstrom $i_{exc}$, die momentane Lateralschwingungs-Erregerfrequenz $f_{excL}$ und/oder die momentane Torsionsschwingungs-Erregerfrequenz $f_{excT}$ gemessen. Die eingestellten Strömungsparameter und die jeweils gemessenen Reaktionen der gemessene Betriebsparameter des Meßaufnehmers 10 werden in  entsprechender Weise zueinander in Relation gesetzt und somit auf die entsprechenden Kalibrierkonstanten abgebildet. Beispielsweise können zur Bestimmung der Konstanten bei der Kalibriermessung für zwei Kalibrier-Medien bekannter, möglichst konstant gehaltener Viskosität und in unterschiedlicher jedoch jeweils gleichbleibender Weise ausgebildeter Inhomogenität ein Verhältnis $X_m'/m$ und/oder $X_m/m$ des jeweils ermittelten Zwischenwerts $X_m'$ bzw. des jeweils ermittelten Massendurchfluß-Meßwert $X_m$ zum dann jeweils aktuellen Massendurchfluß bei bekanntem Luftanteil gebildet. Beispielsweise kann als erstes Kalibrier-Medium strömendes Wasser oder auch Öl mit eingeperlten Luftblasen und als zweites Kalibrier-Medium möglichst homogenes Wasser oder auch verwendet werden. Die ermittelten Kalibrierkonstanten können dann z.B. in Form von digitalen Daten in einem Tabellenspeicher der Messgerät-Elektronik abgelegt werden; sie können aber auch als analoge Einstellwerte für entsprechende Rechenschaltungen dienen. Es sei an dieser Stelle darauf verwiesen, daß das Kalibrieren von Meßaufnehmern der beschriebenen dem Fachmann an und für sich bekannt ist oder sich zumindest aus den obigen Ausführungen ergibt und daher keiner weiteren Erläuterung bedarf. In vorteilhafter Weise können zur Ermittlung des Gesamt-Erregerstrommesswerts $X_{iexc}$, des Lateral-Strommesswert $X_{iexcL}$ und/oder des Torsions-Strommesswerts $X_{iexcT}$ das bereits erwähnten Lateralschwingungs-Amplitudenstellsignal $y_{AML}$ und/oder das Torsionsschwingungs-Amplitudenstellsignal $y_{AMT}$ verwendet werden, da diese den Errgerstrom $i_{exc}$ oder dessen Anteile $i_{excL}$, $i_{excT}$ für die Korrektur ausreichend genau repräsentieren.

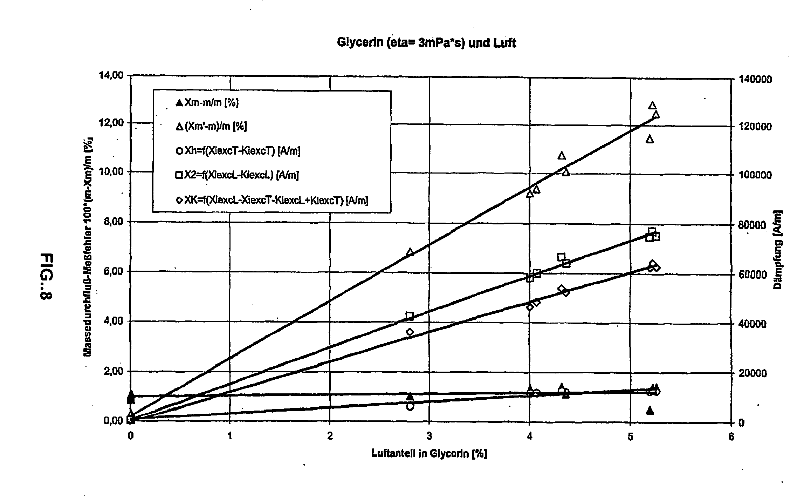

Nach einer weiteren Ausgestaltung der Erfindung erfolgt die Ermittlung des Korrekturwerts $X_K$ dabei, wie auch in Fig. 8 beispielshaft an experimentell ermittelten Strommesswerten $X_{iexcL}$, $X_{iexcT}$ und Leerstrommeßwerten $K_{iexcL}$, $K_{iexcT}$ gezeigt, anhand des Lateral-Schwingungen treibenden Lateral-Stromanteils $i_{excL}$ und anhand des zugehörigen Lateral-Leerstrommeßwerts $K_{iexcL}$, insb. basierend auf der mathematischen Beziehung

$$X_2 = K_2 \cdot \left( X_{iexcL} - K_{iexcL} \right)$$

$$(5)$$

und/oder basierend auf der mathematischen Beziehung

$$X_2 = K_2 \cdot$$

$$(6)$$

Falls erforderlich, insb. bei im Betrieb erheblich variierenden und/oder von den kalibrierten Referenzwerten abweichenden Schwingungsamplituden des vibrierenden Meßrohrs, kann der Lateral-Stromanteil $i_{excL}$ vorab ebenfalls auf die momentane Schwingungsamplitude der Lateral-Schwingungen des Messrohrs, beispielsweise unter Verwendung der Schwingunsmeßsignale $s_1$, $s_2$, normiert werden.

Gemäß einer weiteren Ausgestaltung der Erfindung repräsentiert der Viskosiäts-Meßwert $X_\eta$ eine vorgegebene Referenz-Viskosität, die vorab ermittelt wird. Beispielsweise kann dafür der Viskosiäts-Meßwert $K_\eta$ in Kenntnis des zu messenden Mediums von einer entfernten Leitwarte aus oder vor Ort manuell eingegeben oder von einem externen Viskositätsmesser an die Meßgerät-Elektronik via Feldbus gesendet werden.

Gemäß einer Weiterbildung der Erfindung wird aber auch der Viskositäts-Meßwert $X_\eta$ selbst mittels der Meßgerät-Elektronik 2 erzeugt. Für den oben beschriebenen Fall nämlich, dass das gerade Messrohr im Betrieb, simultan oder alternierend, lateral- und torional schwingen gelassen wird, kann der Viskositäts-Meßwert $X_\eta$ aber auch unter Verwendung von Meßaufnehmer 1 und Meßgerät-Elektronik 2 im Betrieb direkt durch Coriolis-Massedurchfluß-Meßgerät 1 ermittelt werden. Gerade Meßrohre können bekanntlich, zu Torsionsschwingungen um eine im wesentlichen mit der Messrohrlängsachse parallel verlaufenden oder koinzidierenden Torsions-Schwingungsachse angeregt, bewirken, daß im hindurchgeführten Medium radiale Scherkräfte erzeugt werden, wodurch wiederum den Torsionsschwingungen signifikant Schwingungsenergie  entzogen und im Medium dissipiert wird. Daraus resultierend erfolgt eine erhebliche Bedämpfung der Torsionsschwingungen des jeweils schwingenden Meßrohrs zu deren Aufrechterhaltung demzufolge dem Meßrohr zusätzlich elektrische Erregerleistung $P_{exc}$ zugeführt werden muß. Abgeleitet von einer zum Aufrechterhalten der Torsionsschwingungen des Meßrohrs 10 erforderlichen elektrischen Erregerleistung $P_{excT}$, kann in der dem Fachmann bekannten Weise mittels des Meßaufnehmers auch die Viskosität $\eta$ des Mediums zumindest nährungsweise bestimmt werden, vgl. hierzu insb. auch die US-A 45 24 610, die US-A 52 53 533, die US-A 60 06 609 oder die US-B 66 51 513.

Überraschenderweise hat es sich hierbei gezeigt, dass, trotzdem sowohl der zum Aufrechterhalten der Lateralschwingungen des Meßrohrs 10 erforderliche Erregerstrom $i_{exc}$ oder Lateral-Stromanteil $i_{excL}$ als auch, wie insb. in der US-A 45 24 610 oder der EP-A 1 291 639 diskutiert, der zum Aufrechterhalten der Torsionsschwingungen des Meßrohrs 10 erforderliche Erregerstrom $i_{exc}$ oder Torsions-Stromanteil $i_{excT}$ in erheblichem Maße vom Grad der Inhomogenität oder von den Konzentrationen einzelner Mediumsphasen abhängig sind, die Einbeziehung des in der vorbeschriebenen Weise mittels des Coriolis-Massedurchfluß-Meßgerät 1 selbst erzeugten Viskositäts-Meßwerts $X_\eta$ eine erstaunlich robuste wie auch eine sehr gut reproduzierbare Korrektur des Zwischenwerts $X'_m$ und somit auch die Generierung eines sehr genauen Massendurchfluß-Meßwert $X_m$ ermöglichen.

Daher wird gemäß einer ersten Variante dieser Weiterbildung der Erfindung, bei der auch der Viskositäts-Meßwert $X_\eta$ mittels der Meßgerät-Elektronik 2 erzeugt wird, dieser anhand des die Erregeranordnung 40 bei zumindest anteilig torsionsschwingendem Messrohr treibenden Erregerstroms $i_{exc}$, insb. anhand des dem Aufrechterhalten der Torsionsschwingungen des Meßrohrs 10 dienenden Torsions-Stromanteils $i_{excT}$ ermittel. Darüberhinaus wird auch der Zwischenwert $X_2$ und/oder der Korrekturwert $X_K$ basierend auf diesem intern ermittelten Viskositäts-Meßwerts $X_\eta$ berechnet. Unter Berücksichtigung des bereits in der US-A 45 24 610 beschriebenen Zusammenhangs:

$$\sqrt{\eta} \sim i_{excT}$$

$$(7)$$

demgemäß der Torsions-Stromanteil ist reduziert um den oben erwähnten Torsions-Leerstrommesswert $K_{iexcT}$ zumindest bei konstanter Dichte, p, sehr gut mit der Qudratwurzel der tatsächlichen Viskosität, $\eta$, korreliert ist, wird in entsprechender Weise für die Ermittlung des Viskositäts-Meßwerts $X_\eta$ zunächst intern der Meßgerät-Elektronik ein Quadratwert $X_{\Delta iexcT}^2$ des vom Erregerstrom $i_{exc}$ abgeleiteten, um den Torsions-Leerstrommesswert $K_{iexcT}$ reduzierten Torsions-Strommesswerts $X_{iexcT}$ gebildet. Ausgehend davon wird der Viskositäts-Meßwert $X_\eta$ gemäß einer weiteren Ausgestaltung der Erfindung basierende auf der mathematischen Beziehung:

$$X_\eta = K_\eta \cdot \frac{X_{\Delta iexcT}^2}{X_\rho}$$

$$(8)$$

numerisch ermittelt, wobei $K_\eta$ eine, insb. auch von der Geometrie des Meßrohrs 10 abhängige, Gerätekonstante ist. Der in den Nenner der vorgenannten Bildungsvorschrift gestellte Dichte-Meßwert $X_\rho$ trägt hier lediglich der Tatsache Rechnung, daß vom Stromquadrat eigentlich die Information über das Produkt aus Dichte und Viskosität geliefert wird, vgl. hierzu auch die US-A 45 24 610.

Der nach dieser mathematischen Beziehung ermittelte Viskositäts-Meßwert $X_\eta$ stellt eine gute Schätzung für eine dynamische Viskosität des Fluids dar, die bekanntlich auch als Produkt aus kinematischer Viskosität und Dichte, p, des Fluids gebildet werden kann. Soll der Viskositäts-Meßwert $X_\eta$ als eine Schätzung für die kinematische Viskosität dienen, so ist vor dessen Ausgabe eine entsprechende Normierung, z.B. mittels einer einfachen numerischen Division, auf den Dichte-Meßwert $X_\eta$ vorzunehmen. Zu diesem Zweck kann Gl.(8) wie folgt modifiziert werden:

$$X_\eta = K_\eta \cdot \left( \frac{X_{\Delta iexcT}}{X_\rho} \right)^2$$

$$(9)$$

Nach einer weiteren Ausgestaltung der Erfindung wird das Quadrat $X_{iexcT}^2$ des Torsions-Strommesswerts $X_{iexcT}$ zur Bildung des Viskositäts-Meßwerts $X_\eta$ mittels einer einfachen numerischen Division auf einen Amplituden-Meßwert $X_{sT}$ normiert, der eine betriebsbedingt ggf. variierende Signalamplitude wenigstens eines der Schwingungsmeßsignale $s_1$, $s_2$ bei torsionsschwingendem Messrohr momentan repräsentiert. Es hat sich nämlich ferner gezeigt, daß für derartige Viskositäts-Meßgeräte mit einem solchen Meßaufnehmer vom Vibrationstyp, insb. auch bei konstant geregelter Schwingungsamplitude und/oder bei simultaner Anregung von Lateral- und Torsions-Schwingungen, ein Verhältnis $i_{exc}/\theta$ des Erregerstroms $i_{exc}$ zu einer praktisch nicht direkt meßbaren Geschwindigkeit $\theta$ einer die inneren Reibungen und somit auch die Reibungskräfte im Medium verursachenden Bewegung eine genauere Schätzung für die bereits erwähnte, den Auslenkungen des Meßrohrs 10 entgegenwirkenden Dämpfung ist. Daher ist zur weiteren Erhöhung der Genauigkeit des Viskositäts-Meßwerts $X\eta$, insb. aber auch zur Verringerung von dessen Empfindlichkeit auf im Betrieb ggf. schwankende Schwingungsamplituden des vibrierenden Meßrohrs 10, nach ferner vorgesehen, daß für die Ermittlung des Viskositäts-Meßwerts $X\eta$ der Torsions-Strommesswert $X_{iexcT}$ zunächst auf den Amplituden-Meßwert $X_{sT}$ normiert wird, der die oben genannten Geschwindigkeit $\theta$ ausreichend genau repärsentiert. Anders gesagt es wird ein normierter Torsions-Strommesswert $X'_{iexcT}$ gemäß folgender Vorschrift gebildet:

$$X'_{iexcT} = \frac{X_{iexcT}}{X_{sT}}$$

(10)

Der Amplituden-Meßwert $X_{s1}$ wird, basierend auf der Erkenntnis, daß die die viskose Reibung im Medium verursachenden Bewegung, sehr stark mit der mittels des Sensors 51 oder auch mit der mittels des Sensors 51 örtlich erfaßten Bewegung des vibrierenden Meßrohrs 10 korrespondiert, bevorzugt mittels der Meßgerät-Elektronik 50, z.B. mittels interner Amplituden-Meßschaltung, vom wenigstens einen, ggf. bereits digitalisierten, Sensorsignal $s_1$ abgeleitet. Unter Verwendung des normierten Torsions-Strommesswerts $X'_{iexcT}$, kann der Viskositäts-Meßwert dann z.B. nach folgender Vorschrift ermittelt werden:

$$X_\eta = K_\eta \cdot \frac{X_{iexcT}^2}{K_f \cdot X_\rho}$$

(11)

Der mit der vorangehenden Gleichung eingeführte Korrekturfaktor $K_f$ dient hierbei lediglich dazu, den Dichte-Meßwert $X_\rho$ mit der aktuellen Schwingfrequenz des vibrierenden Meßrohrs 10 zu wichten. Es sei an dieser Stelle nochmals darauf hingewiesen, daß das Sensorsignal $s_1$ bevorzugt proportional zu einer Geschwindigkeit einer, insb. lateralen, Auslenkungsbewegung des vibrierenden Meßrohrs 10; das Sensorsignal $s_1$ kann aber z.B. auch proportional zu einer auf das vibrierende Meßrohr 10 wirkenden Beschleunigung oder zu einem vom vibrierenden Meßrohr 10 zurückgelegten Weg sein. Für den Fall, daß das Sensorsignal $s_1$ im obigen Sinne geschwindigkeitsproportional ausgelegt ist, entspricht der Korrekturfaktor $K_f$ der Schwingfrequenz des vibrierenden Meßrohrs 10, während er z.B. bei einem wegproportionalen Sensorsignal $s_1$ gleich der dritten Potenz der Schwingfrequenz ist.

Anstelle der Messung der Errergerenergie $E_{exc}$ oder auch in Ergänzung dazu besteht eine weitere Möglichkeit zur Bestimmung der Viskosität des Mediums darin, eine Druckdifferenz über einer geeigneten Messstrecke entlang der Rohrleitung oder entlang des Messrohrs 10 zu messen und entsprechend auszuwerten, vgl. hierzu insb. die US-A 53 59 881 oder die US-B 65 13 393. Zumindest bei im wesentlichen laminarer Strömung in der Messstrecke kann die der Viskositäts-Meßwert für die Korrektur des Korrektur des Zwischenwerts $X'_m$ ausreichend genau gemäß folgender mathematischer Beziehung ermittelt werden:

$$X_\eta = K_p \cdot \frac{X_{\Delta p}}{X_m} \cdot X_\rho$$

(12)

Die Gl. (12) beruht im Grunde auf dem bekannten Hagen-Poiseuille Gesetz, wobei es sich bei dem Kalibrierfaktor Kp um einen insb. von einem Durchmesser und von einer Länge der Messstrecke abhängigen, vorab bestimmbaren Parameter handelt. Zur Realisierung der vorangehenden mathematischen Beziehung ist die Meßgerät-Elektronik 2 gemäß einer zweiten Variante dieser Weiterbildung der Erfindung, bei der auch der Viskositäts-Meßwert $X\eta$ mittels der Meßgerät-Elektronik 2 erzeugt wird, zumindest zeitweise mit einem Differenz-Drucksensor gekoppelt, der zumindest zeitweise einen eine entlang der Rohrleitung und/oder entlang des Messrohrs gemessene Druckdifferenz repräsentierenden Druckdifferenz-Meßwert $X_{\Delta p}$ liefert.

Die vorgenannten, dem Erzeugen des Massendurchfluß-Meßwertes $X_m$ dienenden Funktionen, symbolisiert

durch die Gl. (1) bis (12), können zumindest teilweise mittels des Signalprozessors DSP oder z.B. auch mittels des oben erwähnten Mikrocomputers 55 realisiert sein. Das Erstellen und Implementieren von entsprechenden Algorithmen, die mit den vorbeschriebenen Gleichungen korrespondierenden oder die die Funktionsweise der Amplitudenregelschaltung 51 bzw. der Frequenzregelschaltung 52 nachbilden, sowie deren Übersetzung in solchen Signalprozessoren ausführbaren Programm-Codes ist dem Fachmann an und für sich geläufig und bedarf daher - jedenfalls in Kenntnis der vorliegenden Erfindung - keiner detaillierteren Erläuterung. Selbstverständlich können vorgenannte Gleichungen auch ohne weiteres ganz oder teilweise mittels entsprechender diskret aufgebauter, analoger und/oder digitaler Rechenschaltungen in der Meßgerät-Elektronik 50 dargestellt werden.

Nach einer Weiterbildung der Erfindung wird zur Bestimmung des momentan geeigneten Korrekturwerts $X_K$ im Betrieb ausgehend vom Zwischenwert $X_2$ dadurch praktisch direkt ermittelt, dass in der Meßgerät-Elektronik eine eindeutige Beziehung zwischen dem aktuellen Zwischenwert $X_2$ und dem dazu passenden Korrekturwerts $X_K$ abgebildet, insb. einprogrammiert, ist. Hierzu weist die Meßgerät-Elektronik 2 ferner einen Tabellenspeicher auf, in dem ein Satz vorab, beispielsweise bei der Kalibrierung des Coriolis-Masseduchfluß-Meßgeräts, ermittelter digitaler Korrekturwerte $X_{K,i}$ abgelegt ist. Auf diese Korrekturwerte $X_{K,i}$ wird von der Messschaltung über eine mittels des momentan gültigen zweiten Zwischenwert $X_2$ abgeleitete Speicheradresse direkt zugegriffen. Der Korrekturwert $X_K$ kann z.B. dadurch in einfacher Weise ermittelt werden, daß der momentan ermittelte Zwischenwert $X_2$ mit entsprechenden im Tabellenspeicher eingetragenen Vorgabewerten für den Zwischenwert $X_2$ verglichen und daraufhin derjenige Korrekturwert $X_{K,i}$ ausgelesen, also von der Auswerte-Elektronik 2 für die weitere Berechnung verwendet wird, der mit dem dem Zwischenwert $X_2$ am nähesten kommenden Vorgabewert korrespondiert. Als Tabellenspeicher kann ein programmierbarer Festwertspeicher, also ein FPGA (field programmable gate array), ein EPROM oder ein EEPROM, dienen. Die Verwendung eines solchen Tabellenspeicher hat u.a. den Vorteil, daß der Korrekturwert $X_K$ nach der Berechnung des Zwischenwerts $X_2$ zur Laufzeit sehr rasch zur Verfügung steht. Zu dem können die in den Tabellenspeicher eingetragenen Korrekturwerte $X_{K,i}$ anhand von wenigen Kalibriermessungen vorab sehr genau, z.B. basierend auf den Gln. (2), (3) und/oder (4) und unter Anwendung der Methode der kleinsten Fehlerquadrate, ermittelt werden. Wie sich aus den voranstehenden Ausführung ohne weiters erkennen lässt, kann eine Korrektur des Zwischenwerts $X'_m$ einerseits unter Verwendung weniger, sehr einfach zu bestimmender Korrekturfaktoren vorgenommen werden. Andererseits kann die Korrektur unter Verwendung des vorab bestimmten Viskositäts-Meßwerts $X_\eta$, und des vorab bestimmten Zwischenwerts $X'_m$ mit einem Rechenaufwand durchgeführt werden, der im Vergleich zu den eingangs erwähnten eher komplexen Rechenverfahren sehr gering ausfällt. Ein weiterer Vorteil der Erfindung ist ferner auch darin zu sehen, dass zumindest einige der vorbeschriebenen Korrekturfaktoren ohne weiteres von den mittels Coriolis-Massedurchflußmeßgerätn ermittelter Strömungsparametern, insb. der gemessenen Dichte und/oder dem - hier vorläufig - gemessenen Massendurchfluß, und/oder von den im Betrieb von Coriolis-Massedurchflußmeßgerätn üblicherweise direkt gemessenen Betriebsparametern, insb. den gemessenen Schwingungsamplituden, Schwingungsfrequenzen und/oder dem Erregerstrom, selbst abgleitet werden können.

## Patentansprüche

1.  Coriolis-Massendurchflußmeßgerät, insb. Coriolis-Massedurchfluß-/ Dichtemessgerät oder Coriolis-Massedurchfluß-/ Viskositätsmeßgerät, zum Messen eines Massedurchflusses eines in einer Rohrleitung strömenden, insb. zwei- oder mehrphasigen, Mediums, welches Coriolis-Massendurchflußmeßgerät einen Meßaufnehmer (1) vom Vibrationstyp und eine mit dem Meßaufnehmer elektrisch gekoppelte Meßgerät-Elektronik (2) umfaßt,

    - wobei der Meßaufnehmer (1) aufweist:

        -- mindestens ein in den Verlauf der Rohrleitung eingesetztes, insb. im wesentlichen gerades, und dem Führen des zu messenden Mediums dienendes Meßrohr (10), das mit der angeschlossenen Rohrleitung kommuniziert,
        -- eine auf das Meßrohr (10) einwirkende Erregeranordnung (40) zum Vibrierenlassen des wenigstens einen Meßrohrs (10), die das Meßrohr (10) im Betrieb zumindest zeitweise und/oder zumindest anteilig in Lateralschwingungen, insb. iegeschwingungen, versetzt, sowie
        -- eine Sensoranordnung (50) zum Erfassen von Vibrationen des wenigstens einen Meßrohrs (10), die wenigstens ein einlaßseitige Schwingungen des Meßrohrs (10) repräsentierendes erstes Schwingungsmeßsignal ($s_1$) und wenigstens ein auslaßseitige Schwingungen des Meßrohrs (10) repräsentierendes zweites Schwingungsmeßsignal ($s_2$) liefert, und

    - wobei die Meßgerät-Elektronik (2)

-- zumindest zeitweise einen die Erregeranordnung (40) treibenden Erregerstrom ($i_{exc}$) und zumindest zeitweise einen Massedurchfluß-Meßwert ($X_m$) liefert, der einen zu messenden Massedurchfluß repräsentiert,

-- einen von den Schwingungsmeßsignalen ($s_1$, $s_2$) abgeleiteten ersten Zwischenwert ($X'_m$), der mit dem zu messenden Massedurchfluß und/oder mit einer Phasendifferenz zwischen den beiden Schwingungsmeßsignalen ($s_1$, $s_2$) korrespondiert, sowie einen vom Erregerstrom ($i_{exc}$) und/oder von einem Anteil des Erregerstroms ($i_{exc}$) abgeleiteten zweiten Zwischenwert ($X_2$) erzeugt, der mit einer, insb. von einer scheinbaren Viskosität und/oder einem Viskositäts-Dichte-Produkt des im Messrohr (10) geführten Mediums abhängigen, Dämpfung der Schwingungen des Messrohrs (10) korrespondiert, sowie

-- unter Verwendung des zweiten Zwischenwerts ($X_2$) und eines vorab oder im Betrieb, insb. auch unter Verwendung des Meßaufnehmers (1) und/oder der Meßgerät-Elektronik (2), ermittelten Viskositäts-Meßwerts ($X\eta$), der mit einer Viskosität des im Messrohr (10) geführten Mediums und/oder mit einer vorgegebenen Referenz-Viskosität korrespondiert, einen Korrekturwert ($X_K$) für den ersten Zwischenwert ($X'_m$) und anhand des ersten Zwischenwerts ($X'_m$) und des Korrekturwerts ($X_K$) den Massedurchfluß-Meßwert ($X_m$) erzeugt.

2. Coriolis-Massendurchflußmeßgerät nach Anspruch 1, wobei der Korrekturwert ($X_K$) eine Abweichung der Viskosität des Mediums von einer im Betrieb anhand des Erregerstroms ($i_{exc}$) und/oder eines Anteils des Erregerstroms ($i_{exc}$) ermittelten scheinbaren Viskosität des im Messrohr (10) geführten Mediums und/oder von einem im Betrieb anhand des Erregerstroms ($i_{exc}$) ermittelten Viskositäts-Dichte-Produkt des im Messrohr (10) geführten Mediums repräsentiert.

3. Coriolis-Massendurchflußmeßgerät nach dem vorherigen Anspruch, wobei die Meßgerät-Elektronik (2) den Korrekturwert ($X_K$) anhand eines Vergleichs des zweiten Zwischenwerts ($X_2$) mit dem Viskositäts-Meßwert ($X_\eta$) und/oder anhand einer zwischen dem zweiten Zwischenwert ($X_2$) und dem Viskositäts-Meßwert ($X_\eta$) bestehenden Differenz ermittelt.

4. Coriolis-Massendurchflußmeßgerät nach einem der vorherigen Ansprüche, bei dem die Meßgerät-Elektronik (2) den zweiten Zwischenwert ($X_2$) auch unter Verwendung wenigstens eines der Schwingungsmeßsignale ($s_1$, $s_2$) erzeugt.

5. Coriolis-Massendurchflußmeßgerät nach einem der vorherigen Ansprüche,

- wobei die Erregeranordnung (40) das Messrohr (10) im Betrieb zumindest zeitweise und/oder zumindest anteilig in, insb. mit den Lateralschwingungen alternierende oder diesen zeitweise überlagerte, Torsionsschwingungen um eine gedachte, mit dem Meßrohr (10) im wesentlichen fluchtende Messrohrlängsachse, insb. eine Trägheitshauptachse des Messrohrs (10), versetzt, und
- wobei die Meßgerät-Elektronik (2) auch den Viskositäts-Meßwert ($X\eta$) anhand des die Erregeranordnung (40) treibenden Erregerstroms ($i_{exc}$) und/oder eines Anteils des Erregerstroms ($i_{exc}$) ermittelt.

6. Coriolis-Massendurchflußmeßgerät nach dem vorherigen Anspruch, wobei das Meßrohr (10), angetrieben von der Erregeranordnung (40), Torsionsschwingungen mit einer Meßrohr-Torsisonsschwingfrequenz ausführt, die verschieden eingestellt ist von einer Meßrohr-Biegeschwingfrequenz mit der das Messrohr (10), angetrieben von der Erregeranordnung (40), Biegeschwingungen ausführt.

7. Coriolis-Massendurchflußmeßgerät nach einem der vorherigen Ansprüche, insb. nach Anspruch 5, bei dem die Meßgerät-Elektronik (2) auch den Viskositäts-Meßwert ($X\eta$) erzeugt.

8. Coriolis-Massendurchflußmeßgerät nach dem vorherigen Anspruch,

- wobei die Meßgerät-Elektronik (2) einen vom ersten und/oder vom zweiten Schwingungsmeßsignal ($s_1$, $s_2$) abgeleiteten, eine Dichte des Mediums repräsentierenden Dichte-Meßwert ($X\rho$) liefert und
- wobei die Meßgerät-Elektronik (2) den Korrekturwert ($X_K$), insb. den Viskositäts-Meßwert ($X\eta$), auch anhand des Dichte-Meßwerts ($X_\rho$) ermittelt.

9. Coriolis-Massendurchflußmeßgerät nach einem der vorherigen Ansprüche, bei dem die Meßgerät-Elektronik (2) mit einem externen, insb. vom Coriolis-Massendurchflußmeßgerät entfernt angeordneten, Viskositäts-Meßgerät gekoppelt ist, das zumindest zeitweise den Viskositäts-Meßwert ($X\eta$) liefert.

10. Coriolis-Massendurchflußmeßgerät nach einem der vorherigen Ansprüche, bei dem die Meßgerät-Elektronik (2) zumindest zeitweise mit einem Differenz-Drucksensor gekoppelt ist, der zumindest zeitweise einen eine entlang der Rohrleitung gemessene Druckdifferenz repräsentierenden Druckdifferenz-Meßwert ($X_{\Delta p}$) liefert.

11. Coriolis-Massendurchflußmeßgerät nach einem der vorherigen Ansprüche, bei dem die Meßgerät-Elektronik (2)

    - anhand des Erregerstroms ($i_{exc}$) und/oder anhand eines Anteils des Erregerstroms ($i_{exc}$) sowie
    - unter Verwendung des Viskositäts-Meßwerts ($X\eta$) zumindest zeitweise einen Konzentrations-Meßwert ($X_c$) ermittelt, der bei einem zwei- oder mehrphasigen Medium im Messrohr einen, insb. relative, Volumen- und/oder Massenanteil einer Mediumsphase repräsentiert.

12. Coriolis-Massendurchflußmeßgerät nach einem der vorherigen Ansprüche,

    - bei dem das Messrohr (10) mit der angeschlossenen Rohrleitung über ein in ein Einlaßende (11#) mündendes Einlaßrohrstück (11) und über ein in ein Auslaßende (12#) mündendes Auslaßrohrstück (12) kommuniziert, und
    - bei dem der Meßaufnehmer einen am Einlaßende (11#) und am Auslaßende (12#) des Messrohrs (10) fixierten, insb. auch mit der Erregeranordnung mechanischen gekoppelten, Gegenschwinger (20) umfasst, der im Betrieb zumindest zeitweise, insb. gegenphasig zum Messrohr (10), vibriert.

13. Verwendung eines Coriolis-Massendurchflußmeßgeräts nach einem der vorherigen Ansprüche zum Messen eines Massedurchflusses eines in einer Rohrleitung strömenden zwei- oder mehrphasigen Mediums, insb. eines Flüssigkeits-Gas-Gemisches.

14. Verfahren zum Messen eines Massedurchflusses eines in einer Rohrleitung strömenden, insb. zwei- oder mehrphasigen, Mediums, mittels eines Coriolis-Massendurchflußmeßgeräts mit einem Meßaufnehmer (1) vom Vibrationstyp und einer mit dem Meßaufnehmer (1) elektrisch gekoppelten Meßgerät-Elektronik (2), welches Verfahren folgende Schritte umfasst:

    - Strömenlassen des zu messenden Mediums durch wenigstens ein mit der Rohrleitung kommunizierendes Messrohr (10) des Meßaufnehmers (1) und Einspeisen eines Erregerstroms ($i_{exc}$) in eine mit dem das Medium führenden Meßrohr (10) mechanisch gekoppelten Erregeranordnung (40) zum Bewirken von mechanischen Schwingungen, insb. Biegeschwingungen, des Meßrohrs (10),
    - Vibrierenlassen des Meßrohrs (10) in einem zum Erzeugen von Corioliskräften im hindurchströmenden Medium geeigneten Schwingungsmode,
    - Erfassen von Vibrationen des Meßrohrs (10) und Erzeugen eines einlaßseitige Schwingungen repräsentierenden ersten Schwingungsmeßsignals ($s_1$) und eines auslaßseitige Schwingungen repräsentierenden zweiten Schwingungsmeßsignals ($s_2$),
    - Entwickeln eines mit dem zu messenden Massedurchfluß und/oder mit einer Phasendifferenz zwischen den beiden Schwingungsmeßsignalen ($s_1$, $s_2$) korrespondierenden ersten Zwischenwertes ($X'_m$) unter Verwendung der beiden Schwingungsmeßsignale ($s_1$, $s_2$),
    - Ermitteln eines vom Erregerstrom ($i_{exc}$) abgeleiteten zweiten Zwischenwerts ($X_2$), der mit einer, insb. von einer scheinbaren Viskosität und/oder einem Viskositäts-Dichte-Produkt des im Messrohr (10) geführten Mediums abhängigen, Dämpfung der Schwingungen des Messrohrs (10) korrespondiert,
    - Erzeugen eines Korrekturwertes ($X_K$) für den Zwischenwert ($X'_m$) mittels des zweiten Zwischenwerts ($X_2$) und mittels eines vorab, insb. auch unter Verwendung des Meßaufnehmers (1) und/oder der Meßgerät-Elektronik (2), ermittelten, mit einer Viskosität des im Messrohr (10) geführten Mediums korrespondierenden Viskositäts-Meßwerts ($X\eta$) sowie
    - Korrigieren des Zwischenwertes ($X'_m$) mittels des Korrekturwertes ($X_K$) und Erzeugen eines den zu messenden Massendurchfluß repräsentierenden Massedurchfluß-Meßwerts ($X_m$).

15. Verfahren nach dem vorherigen Anspruch, das folgende weiteren Schritt umfaßt:

    - Bewirken von Biegeschwingungen des Meßrohrs (10) zum Erzeugen von Corioliskräften im hindurchströmenden Medium.

16. Verfahren nach dem vorherigen Anspruch, das folgende weiteren Schritte umfaßt:

    - Bewirken von, insb. den Biegeschwingungen überlagerten, Torsionsschwingungen des Meßrohrs (10), und

- Ermitteln des zweiten Zwischenwerts ($X_2$) unter Berücksichtigung des Erregerstroms ($i_{exc}$) und/oder zumindest eines die Torsionsschwingungen des Messrohrs (10) bewirkenden Anteils vom Erregerstrom ($i_{exc}$).

**17.** Verfahren nach einem der Ansprüche 14 bis 16, bei dem der Schritt des Erzeugens des Korrekturwertes ($X_K$) für den Zwischenwert ($X'_m$) folgende Schritte umfasst:

- Vergleichen des zweiten Zwischenwerts ($X_2$) mit dem Viskositäts-Meßwert ($X_\eta$) und/oder Ermitteln einer zwischen dem zweiten Zwischenwert ($X_2$) und dem Viskositäts-Meßwert ($X_\eta$) bestehenden Differenz und
- Ermitteln einer Abweichung der Viskosität des Mediums von einer im Betrieb anhand des Erregerstroms ($i_{exc}$) ermittelten scheinbaren Viskosität des im Messrohr (10) geführten Mediums und/oder von einem im Betrieb anhand des Erregerstroms ($i_{exc}$) ermittelten Viskositäts-Dichte-Produkts des im Messrohr (10) geführten Mediums.

**18.** Verfahren nach einem der Ansprüche 14 bis 17, folgende weitere Schritte umfassend:

- Entwickeln eines eine Dichte des Mediums repräsentierenden zweiten Meßwerts ($X_\rho$) anhand der Schwingungsmeßsignale ($s_1$, $s_2$) und
- Entwickeln eines Korrekturwertes ($X_k$) unter Verwendung des zweiten Meßwerts ($X_\rho$).

**19.** Anwenden des Verfahrens nach einem der Ansprüche 14 bis 18 zum Kalibrieren eines Coriolis-Massendurchflußmeßgeräts und/oder eines Meßaufnehmers vom Vibrationstyp mit wenigstens einem Messrohr.

**Claims**

**1.** Coriolis mass flow measuring instrument, particularly a Coriolis mass flowmeter/densimeter or Coriolis mass flowmeter/viscosity meter, designed to measure a mass flow of a medium, particularly a two-phase or multi-phase medium, flowing through a pipe, said Coriolis mass flowmeter comprising a vibronic-type sensor (1) and measuring device electronics (2) electrically coupled to the sensor,

- wherein the sensor (1) has:

-- at least one measuring tube (10), which is installed in the course of the pipe, is essentially straight, and is designed to conduct the medium under measurement, said measuring tube communicating with the connected pipe,
-- an exciter arrangement (40) acting on the measuring tube (10) to let the at least one measuring tube (10) vibrate, said exciter arrangement causing the measuring tube (10), during operation, to vibrate at least intermittently and/or at least in part with lateral vibrations, particularly flexural vibrations, and
-- a sensor arrangement (50) to measure vibrations of the at least one measuring tube (10), said sensor arrangement delivering at least a first vibration measuring signal ($S_1$) that represents vibrations of the measuring tube (10) on the inlet side, and a second vibration measuring signal ($S_2$) that represents vibrations of the measuring tube (10) on the outlet side, and

- wherein the measuring device electronics (2)

-- supply at least intermittently an exciter current ($i_{exc}$) that drives the exciter arrangement (40), and at least intermittently a mass flow measured value ($X_m$) which represents a mass flow to be measured,
-- a first intermediate value ($X'_m$) which is derived from the vibration measuring signals ($S_1$, $S_2$), and corresponds to the mass flow to be measured and/or to a phase difference between the two vibration measuring signals ($S_1$, $S_2$), and/or a second intermediate value ($X_2$) which is derived from the exciter current ($i_{exc}$) and/or a part of the exciter current ($i_{exc}$) and corresponds to a damping of the vibrations of the measuring tube (10), in particular a damping that is dependent on an apparent viscosity and/or a viscosity-density product of the medium conducted in the measuring tube (10), and
-- using the second intermediate value ($X_2$) and a viscosity measured value ($X_n$), which is determined beforehand or during operation, particularly also using the sensor (1) and/or the measuring device electronics (2), and corresponds to a viscosity of the medium conducted in the measuring tube (10) and/or to a predefined reference viscosity, generates a correction value ($X_k$) for the first intermediate value ($X'_m$), and using the first intermediate value ($X'_m$) and the correction value ($X_k$) generates the mass flow measured value ($X_m$).

2. Coriolis mass flowmeter as claimed in Claim 1, wherein the correction value ($X_k$) represents a deviation of the viscosity of the medium from an apparent viscosity of the medium conducted in the measuring tube (10), which is determined during operation using the exciter current ($i_{exc}$) and/or a part of the exciter current ($i_{exc}$), and/or a deviation from the viscosity-density product of the medium conducted in the measuring tube (10) which is determined using the exciter current ($i_{exc}$).

3. Coriolis mass flowmeter as claimed in the previous claim, wherein the measuring device electronics (2) determine the correction value ($X_k$) by comparing the second intermediate value ($X_2$) with the viscosity measured value ($X_\eta$) and/or on the basis of a difference between the second intermediate value ($X_2$) and the viscosity measured value ($X_\eta$).

4. Coriolis mass flowmeter as claimed in one of the previous claims, wherein the measuring device electronics (2) generate the second intermediate value ($X_2$) also by using at least one of the vibration measuring signals ($S_1$, $S_2$).

5. Coriolis mass flowmeter as claimed in one of the previous claims,

   - wherein, during operation, the exciter arrangement (40) causes the measuring tube (10) to vibrate at least temporarily and/or at least in part with torsional vibrations, particularly torsional vibrations that alternate with the lateral vibrations or are superimposed thereupon intermittently, around an imaginary measuring tube longitudinal axis which is essentially flush with the measuring tube (10), particularly a principle axis of inertia of the measuring tube (10), and
   - wherein the measuring tube electronics (2) also determine the viscosity measured value ($X_\eta$) using the exciter current ($i_{exe}$) driving the exciter arrangement and/or a part of the exciter current ($i_{exc}$).

6. Coriolis mass flowmeter as claimed in the previous claim, wherein the measuring tube (10), driven by the exciter arrangement (40), executes torsional vibrations with a measuring tube torsional vibration frequency that is set differently to a measuring tube flexural frequency at which the measuring tube, driven by the exciter arrangement (40), performs flexural vibrations.

7. Coriolis mass flowmeter as claimed in one of the previous claims, particularly Claim 5, where the measuring device electronics (2) also generate the viscosity measured value ($X_\eta$).

8. Coriolis mass flowmeter as claimed in the previous claim,

   - wherein the measuring device electronics (2) deliver a density measured value ($X_p$) that represents the density of the medium and is derived from the first and/or from the second vibration measuring signal ($S_1$, $S_2$), and
   - wherein the measuring device electronics (2) determine the correction value ($X_k$), particularly the viscosity measured value ($X_\eta$), also using the density measured value ($X_p$).

9. Coriolis mass flowmeter as claimed in one of the previous claims, wherein the measuring device electronics (2) are coupled to an external viscosity measuring instrument, particularly a viscosity measuring instrument that is arranged remotely from the Coriolis mass flowmeter, which supplies the viscosity measured value ($X_\eta$) at least intermittently.

10. Coriolis mass flowmeter as claimed in one of the previous claims, wherein the measuring device electronics (2) are coupled at least intermittently to a differential pressure sensor, which supplies, at least intermittently, a differential pressure measured value ($X\Delta_p$) that represents a pressure difference measured along the pipe.

11. Coriolis mass flowmeter as claimed in one of the previous claims, wherein the measuring device electronics (2)

   - on the basis of the exciter current ($i_{exc}$) and/or part of the exciter current ($i_{exc}$) and
   - using the viscosity measured value ($X_\eta$) determine, at least intermittently, a concentration measured value ($X_c$) which represents a, particularly relative, volume component and/or mass component of a medium phase in the event of a two-phase or multi-phase medium in the measuring tube.

12. Coriolis mass flowmeter as claimed in one of the previous claims

   - wherein the measuring tube (10) communicates with the connected pipe via an inlet pipe section (11) that ends in an inlet end (11#) and via an outlet pipe section (12) that ends in an outlet end (12#), and
   - wherein the sensor comprises a counter-vibration unit (20), which is fixed at the inlet end (11#) and outlet end (12#) of the measuring tube, particularly a counter-vibration unit mechanically coupled to the exciter arrangement, which vibrates at least intermittently during operation, particularly in opposite phase with the measuring tube (10).

13. Use of a Coriolis mass flowmeter as claimed in one of the previous claims to measure a mass flow of a two-phase or multi-phase medium, particularly a liquid-gas mixture, flowing through a pipe.

14. Method to measure a mass flow of a medium flowing through a pipe, particularly a two-phase or multi-phase medium, using a Coriolis mass flowmeter with a vibronic-type sensor (1) and measuring device electronics (2) electrically coupled to the sensor (1), said method comprising the following steps:

- Allowing the medium under measurement to flow through at least one measuring tube (10) of the sensor (1) that communicates with the pipe, and feeding an exciter current ($i_{exc}$) into an exciter arrangement (40) that is mechanically coupled to the measuring tube (10) conducting the medium in order to effectuate mechanical vibrations, particularly flexural vibrations, of the measuring tube (10);
- Allowing the measuring tube (10) to vibrate in a vibration mode that is suitable for generating Coriolis forces in the medium flowing through the tube;
- Measuring vibrations of the measuring tube (10) and generating a first vibration measuring signal ($S_1$) representing vibrations on the inlet side, and a second vibration measuring signal ($S_2$) representing vibrations on the outlet side;
- Using the two vibration measuring signals ($S_1$, $S_2$) to develop a first intermediate value ($X'_m$) that corresponds to the mass flow under measurement and/or to a phase difference between the two vibration measuring signals ($S_1$, $S_2$);
- Determining a second intermediate value ($X_2$) that is derived from the exciter current ($i_{exc}$), said value corresponding to a damping of the vibrations of the measuring tube (10), particularly a damping that is dependent on an apparent viscosity and/or a viscosity-density product of the medium conducted in the measuring tube (10);
- Generating a correction value ($X_k$) for the intermediate value ($X'_m$) using the second intermediate value ($X_2$) and using a viscosity measured value ($X_\eta$) that corresponds to a viscosity of the medium conducted in the measuring tube (10), particularly a value determined beforehand using the sensor (1) and/or the measuring device electronics (2); and
- Correcting the intermediate value ($X'_m$) using the correction value ($X_k$) and generating a mass flow measured value ($X_m$) that represents the mass flow under measurement.

15. Method as claimed in the previous claim, comprising the following additional step:

- Effectuating flexural vibrations of the measuring tube (10) to generate Coriolis forces in the medium flowing through the tube.

16. Method as claimed in the previous claim, comprising the following additional steps:

- Effectuating torsional vibrations of the measuring tube (10), particularly vibrations superimposed on the flexural vibrations, and
- Determining the second intermediate value ($X_2$) taking into consideration the exciter current ($i_{exc}$) and/or at least one part of the exciter current ($i_{exc}$) that causes the torsional vibrations of the measuring tube (10).

17. Method as claimed in one of the Claims 14 to 16, wherein the step involving the generation of the correction value ($X_k$) for the intermediate value ($X'_m$) comprises the following steps:

- Comparison of the second intermediate value ($X_2$) with the viscosity measured value ($X_\eta$) and/or determination of a difference between the second intermediate value ($X_2$) and the viscosity measured value ($X_\eta$).
- Determination of a deviation of the viscosity of the medium from an apparent viscosity of the medium conducted in the measuring tube (10), which is determined during operation using the exciter current ($i_{exc}$), and/or from a viscosity-density product of the medium conducted in the measuring tube (10), which is determined during operation using the exciter current ($i_{exc}$).

18. Method as claimed in one of the Claims 14 to 17, comprising the following additional steps:

- Development of a second measured value ($X_P$) that represents a density of the medium using the vibration measuring signals ($S_1$, $S_2$), and

- Development of a correction value ($X_K$) using the second measured value ($X_P$).

**19.** Use of the method as claimed in one of the Claims 14 to 18 to calibrate a Coriolis mass flowmeter and/or a vibronic-type sensor with at least one measuring tube.

**Revendications**

**1.** Débitmètre massique Coriolis, notamment un débitmètre massique / densimètre Coriolis ou un débitmètre massique / viscosimètre Coriolis, destiné à la mesure d'un débit massique d'un produit, notamment à deux ou plusieurs phases, s'écoulant dans une conduite, lequel débitmètre massique Coriolis comprend un transmetteur de mesure (1) du type à vibrations et une électronique d'appareil de mesure (2) couplée électriquement avec le transmetteur de mesure,

- pour lequel le transmetteur de mesure (1) comprend :

-- au moins un tube de mesure (10) installé dans le cheminement de la conduite, notamment pour l'essentiel droit, et destiné à acheminer le produit à mesurer, lequel tube communique avec la conduite raccordée,
-- un circuit excitateur (40) agissant sur le tube de mesure (10), destiné à faire entrer en vibrations l'au moins un tube de mesure (10), qui fait entrer, en fonctionnement au moins temporairement et/ou au moins partiellement, le tube de mesure (10) en vibrations latérales, notamment des vibrations de flexion, ainsi que
-- un circuit capteur (50) destiné à la mesure des vibrations de l'au moins un tube de mesure (10), qui fournit au moins un premier signal de mesure de vibrations ($s_1$) représentant les vibrations côté entrée du tube de mesure (10) et au moins un deuxième signal de mesure de vibrations ($s_2$) représentant les vibrations côté sortie du tube de mesure (10), et

- pour lequel l'électronique d'appareil de mesure (2)

-- fournit au moins temporairement un courant d'excitation ($i_{exc}$) excitant le circuit excitateur (40) et au moins temporairement une valeur mesurée de débit massique ($X_m$), qui représente un débit massique à mesurer,
-- génère une première valeur intermédiaire ($X'_m$) dérivée des signaux de mesure de vibrations ($s_1$, $s_2$), laquelle première valeur correspond au débit massique à mesurer et/ou à une différence de phase entre les deux signaux de mesure de vibrations ($s_1$, $s_2$), ainsi qu'une deuxième valeur intermédiaire ($X_2$) dérivée du courant d'excitation ($i_{exc}$) et/ou d'une part du courant d'excitation ($i_{exc}$), laquelle deuxième valeur correspond à un amortissement des vibrations du tube de mesure (10), dépendant notamment d'une viscosité apparente et/ou d'un produit viscosité-densité du produit acheminé dans le tube de mesure (10), ainsi que
-- génère une valeur de correction ($X_k$) pour la première valeur intermédiaire ($X'_m$) au moyen de la deuxième valeur intermédiaire ($X_2$) et d'une valeur mesurée de viscosité ($X_\eta$) déterminée au préalable et en fonctionnement, notamment également au moyen du transmetteur de mesure (1) et/ou de l'électronique d'appareil de mesure (2), laquelle valeur mesurée correspond à une viscosité du produit acheminé dans le tube de mesure (10) et/ou à une viscosité de référence prédéfinie, et génère la valeur mesurée de débit massique ($X_m$) au moyen de la première valeur intermédiaire ($X'_m$) et de la valeur de correction ($X_k$).

**2.** Débitmètre massique Coriolis selon la revendication 1, pour lequel la valeur de correction ($X_k$) représente un écart de la viscosité du produit d'une viscosité apparente, déterminée en fonctionnement au moyen du courant d'excitation ($i_{exe}$) et/ou d'un part du courant d'excitation ($i_{exc}$), du produit acheminé dans le tube de mesure (10) et/ou d'un produit viscosité-densité, déterminé en fonctionnement au moyen du courant d'excitation ($i_{exc}$), du produit acheminé dans le tube de mesure (10).

**3.** Débitmètre massique Coriolis selon la revendication précédente, pour lequel l'électronique d'appareil de mesure (2) détermine la valeur de correction ($X_k$) au moyen d'une comparaison de la deuxième valeur intermédiaire ($X_2$) avec la valeur mesurée de viscosité ($X_\eta$) et/ou au moyen d'un différence existant entre la deuxième valeur intermédiaire ($X_2$) et la valeur mesurée de viscosité ($X_\eta$).

**4.** Débitmètre massique Coriolis selon l'une des revendications précédentes, pour lequel l'électronique d'appareil de mesure (2) génère la deuxième valeur intermédiaire ($X_2$) également au moyen d'au moins l'un des signaux de vibrations ($s_1$, $s_2$).

**5.** Débitmètre massique Coriolis selon l'une des revendications précédentes

- pour lequel le circuit excitateur (40) fait entrer le tube de mesure (10), en fonctionnement au moins temporairement et/ou au moins partiellement, en vibrations torsionnelles, notamment alternant avec les vibrations latérales ou se superposant temporairement à celles-ci, autour d'un axe longitudinal de tube de mesure imaginaire, aligné pour l'essentiel avec le tube de mesure (10), notamment un axe d'inertie principal du tube de mesure (10), et
- pour lequel l'électronique d'appareil de mesure (2) détermine également la valeur mesurée de viscosité ($X_\eta$) au moyen du courant d'excitation ($i_{exe}$) excitant le circuit excitateur (40) et/ou d'une part du courant d'excitation ($i_{exe}$).

**6.** Débitmètre massique Coriolis selon la revendication précédente, pour lequel le tube de mesure (10), qui est fait entré en vibrations par le circuit excitateur (40), exécute des vibrations torsionnelles à une fréquence de vibrations torsionnelles du tube de mesure, qui est réglée de façon variable par une fréquence de vibrations de flexion à laquelle le tube de mesure (10), qui est fait entré en vibrations par le circuit excitateur (40), exécute des vibrations de flexion.

**7.** Débitmètre massique Coriolis selon l'une des revendications précédentes, notamment selon la revendication 5, pour lequel l'électronique d'appareil de mesure (2) génère également la valeur mesurée de viscosité ($X_\eta$).

**8.** Débitmètre massique Coriolis selon la revendication précédente,

- pour lequel l'électronique d'appareil de mesure (2) fournit une valeur mesurée de densité ($X_\rho$) représentant une densité du produit, dérivée d'un premier et/ou d'un deuxième signal de mesure de vibrations ($s_1$, $s_2$), et
- pour lequel l'électronique d'appareil de mesure (2) détermine la valeur de correction ($X_k$), notamment la valeur mesurée de viscosité ($X_\eta$), également au moyen de la valeur mesurée de densité ($X_\rho$).

**9.** Débitmètre massique Coriolis selon l'une des revendications précédentes, pour lequel l'électronique d'appareil de mesure (2) est couplée avec un viscosimètre externe, disposé à distance, notamment un débitmètre massique Coriolis, lequel fournit au moins temporairement la valeur mesurée de viscosité ($X_\eta$).

**10.** Débitmètre massique Coriolis selon l'une des revendications précédentes, pour lequel l'électronique d'appareil de mesure (2) est couplée au moins temporairement avec un capteur de pression différentielle, lequel fournit au moins temporairement une valeur mesurée de différence de pression ($X_{\Delta\rho}$) représentant une différence de pression mesurée le long de la conduite.

**11.** Débitmètre massique Coriolis selon l'une des revendications précédentes, pour lequel l'électronique d'appareil de mesure (2)

- détermine au moyen du courant d'excitation ($i_{exc}$) et/ou au moyen d'une part du courant d'excitation ($i_{exc}$), ainsi que
- détermine au moyen de la valeur mesurée de viscosité ($X_\eta$) au moins temporairement une valeur de mesurée de concentration ($X_c$), qui représente, pour un produit à deux ou plusieurs phases s'écoulant dans le tube de mesure, un part de volume et/ou de masse, notamment relative, d'une phase d'un produit.

**12.** Débitmètre massique Coriolis selon l'une des revendications précédentes,

- pour lequel le tube de mesure (10) communique avec la conduite raccordée par l'intermédiaire d'un morceau de tube (11) aboutissant dans une extrémité d'entrée (11#) et par l'intermédiaire d'un morceau de tube (12) aboutissant dans une extrémité de sortie (12#), et
- pour lequel le transmetteur de mesure comprend un générateur de contre-vibrations (20) fixé à l'extrémité d'entrée (11#) et à l'extrémité de sortie (12#) du tube de mesure (10), notamment également couplé mécaniquement avec le circuit excitateur, lequel générateur vibre en fonctionnement, au moins temporairement, notamment en opposition de phase par rapport au tube de mesure (10).

**13.** Utilisation d'un débitmètre massique Coriolis selon l'une des revendications précédentes destiné à la mesure d'un débit massique d'un produit à deux ou plusieurs phases s'écoulant dans une conduite, notamment un mélange liquide-gaz.

**14.** Procédé destiné à la mesure d'un débit massique d'un produit, notamment à deux ou à plusieurs phases, s'écoulant dans une conduite, au moyen d'un débitmètre Coriolis avec un transmetteur de mesure (1) du type à vibrations et une électronique d'appareil de mesure (2) couplée électriquement avec le transmetteur de mesure (1), lequel procédé comprend les étapes suivantes :

- écoulement du produit à mesurer à travers au moins un tube de mesure (10), communiquant avec la conduite, du transmetteur de mesure (1) et injection d'un courant d'excitation ($i_{exc}$) dans un circuit d'excitation (40) couplé mécaniquement avec le tube de mesure (10) acheminant le produit, circuit destiné à faire entrer en vibrations mécaniques, notamment en vibrations de flexion, le tube de mesure (10),
- entrée en vibrations du tube de mesure (10) dans un mode de vibrations approprié pour la génération de forces de Coriolis dans le produit acheminé à travers le tube,
- mesure des vibrations du tube de mesure (10) et génération d'un premier signal de mesure de vibrations ($s_1$) représentant des vibrations côté entrée et d'un deuxième signal de mesure de vibrations ($s_2$) représentant des vibrations côté sortie,
- développement d'une première valeur intermédiaire ($X'_m$) correspondant à un débit massique à mesurer et/ou à une différence de phase entre les deux signaux de mesure de vibrations ($s_1$, $s_2$), au moyen des deux signaux de mesure de vibrations ($s_1$, $s_2$),
- détermination d'une deuxième valeur intermédiaire ($X_2$) dérivée du courant d'excitation ($i_{exc}$), laquelle correspond à un amortissement des vibrations du tube de mesure (10), dépendant notamment d'une viscosité apparente et/ou d'un produit viscosité-densité du produit acheminé dans le tube de mesure (10),
- génération d'une valeur de correction ($X_k$) pour la valeur intermédiaire ($X'_m$) au moyen de la deuxième valeur intermédiaire ($X_2$) et au moyen d'une valeur de mesure de viscosité ($X_\eta$) correspondant à une viscosité du produit acheminé dans le tube de mesure (10), déterminée au préalable, notamment également en utilisant le transmetteur de mesure (1) et/ou l'électronique d'appareil de mesure (2), ainsi que
- correction de la valeur intermédiaire ($X'_m$) au moyen de la valeur de correction ($X_k$) et génération d'une valeur mesurée de débit massique ($X_m$) représentant le débit massique à mesurer.

**15.** Procédé selon la revendication précédente, lequel comprend l'étape supplémentaire suivante :

- production de vibrations de flexion du tube de mesure (10) destinée à générer des forces de Coriolis dans le produit s'écoulant dans le tube.

**16.** Procédé selon la revendication précédente, lequel comprend les étapes supplémentaires suivantes :

- production de vibrations torsionnelles du tube de mesure (10), notamment superposées aux vibrations de flexion, et
- détermination de la deuxième valeur intermédiaire ($X_2$) en tenant compte du courant d'excitation ($i_{exc}$) et/ou au moins d'une part du courant d'excitation ($i_{exc}$) produisant les vibrations torsionnelles du tube de mesure (10).

**17.** Procédé selon l'une des revendications 14 à 16, pour lequel l'étape de génération de la valeur de correction ($X_k$) pour la valeur intermédiaire ($X'_m$) comprend les étapes suivantes :

- comparaison de la deuxième valeur intermédiaire ($X_2$) avec la valeur mesurée de viscosité ($X_\eta$) et/ou détermination d'une différence existant entre la deuxième valeur intermédiaire ($X_2$) et la valeur mesurée de viscosité ($X_\eta$), et
- détermination d'un écart de la viscosité du produit d'une viscosité apparente, déterminée en fonctionnement au moyen du courant d'excitation ($i_{exc}$), du produit acheminé dans le tube de mesure (10) et/ou d'un produit viscosité-densité, déterminé en fonctionnement au moyen du courant d'excitation ($i_{exc}$), du produit acheminé dans le tube de mesure (10).

**18.** Procédé selon l'une des revendications 14 à 17, lequel comprend les étapes supplémentaires suivantes :

- développement d'une deuxième valeur mesurée ($X_\rho$) au moyen des signaux de mesure de vibrations ($s_1$, $s_2$), valeur représentant une densité du produit, et
- développement d'une valeur de correction ($X_k$) en utilisant la deuxième valeur mesurée ($X_\rho$).

**19.** Application du procédé selon l'une des revendications 14 à 18 en vue de l'étalonnage d'un débitmètre massique Coriolis et/ou d'un transmetteur de mesure du type à vibrations avec au moins un tube de mesure.

FIG.1

Fig. 2

FIG..5

Fig. 3

FIG..4

FIG..6

**FIG..7**

Glycerin (eta= 3mPa*s) und Luft

FIG..8

FIG..9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03095950 A
- WO 03095949 A
- WO 03076880 A
- WO 0237063 A
- WO 0133174 A
- WO 0057141 A
- WO 9939164 A
- WO 9807009 A
- WO 9516897 A
- WO 8803261 A
- US 20030208325 A
- US 6691583 B
- US 66515113 B
- US 6513393 B
- US 6505519 B
- US 6006609 A
- US 5869770 A
- US 5796011 A
- US 5602346 A
- US 5602345 A
- US 5531126 A
- US 5301557 A
- US 5253533 A
- US 5218873 A

- US 5069074 A
- US 4876898 A
- US 4733569 A
- US 4660421 A
- US 4524610 A
- US 4491025 A
- US 4187721 A
- EP 1281938 A
- EP 1001254 A
- EP 553939 A
- US 6651513 B
- WO 0036379 A
- JP 10281846 A
- US 4801897 A
- US 5648616 A
- EP 1158289 A
- US 5969265 A
- EP 317340 A
- WO 0014485 A
- US 6505519 A
- EP 866319 A
- EP 1291639 A
- US 5359881 A